(19) Europäisches Patentamt
European Patent Office
Office européen des brevets

(11) **EP 3 076 738 B1**

(12) **EUROPEAN PATENT SPECIFICATION**

(45) Date of publication and mention
of the grant of the patent:
**13.03.2019 Bulletin 2019/11**

(51) Int Cl.:
***H04W 72/12*** *(2009.01)*

(21) Application number: **15305478.8**

(22) Date of filing: **31.03.2015**

(54) **APPARATUSES, METHODS AND COMPUTER PROGRAMS SUITABLE FOR BASE STATION TRANSCEIVERS AND MOBILE TRANSCEIVERS IN A MOBILE COMMUNICATION SYSTEM**

VORRICHTUNGEN, VERFAHREN UND COMPUTERPROGRAMME, DIE FÜR SENDER/EMPFÄNGER EINER BASISSTATION UND MOBILE SENDER-EMPFÄNGER IN EINEM MOBILKOMMUNIKATIONSSYSTEM GEEIGNET SIND

APPAREILS, PROCÉDÉS ET PROGRAMMES INFORMATIQUES APPROPRIÉS POUR DES ÉMETTEURS-RÉCEPTEURS DE STATION DE BASE ET ÉMETTEURS-RÉCEPTEURS MOBILES DANS UN SYSTÈME DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2016 Bulletin 2016/40**

(73) Proprietor: **Alcatel Lucent
91620 Nozay (FR)**

(72) Inventors:
• **Braun, Volker
70435 Stuttgart (DE)**
• **Saur, Stephan
70435 Stuttgart (DE)**
• **Cesar, Bozo
70435 Stuttgart (DE)**

(74) Representative: **Novagraaf Technologies
Bâtiment O2
2, rue Sarah Bernhardt
CS90017
92665 Asnières-sur-Seine Cedex (FR)**

(56) References cited:
US-A1- 2012 281 566  US-A1- 2013 028 221
US-A1- 2013 250 828  US-A1- 2013 294 319
US-A1- 2015 023 264

• **IPWIRELESS: "Initial Cell Access Procedure in LTE", 3GPP DRAFT; TDOC_INITIAL_CELL_ACCESS_V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Denver, USA; 20060209, 9 February 2006 (2006-02-09), XP050130742, [retrieved on 2006-02-09]**
• **SAMSUNG: "Search Space Design and Transmission Timing for DL Control Signaling", 3GPP DRAFT; R1-150348 DL CONTROL_SEARCH SPACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933557, Retrieved from the Internet: URL:http://www.3gpp.org/ftp/Meetings_3GPP_SYNC/RAN1/Docs/ [retrieved on 2015-02-08]**

## Description

Technical Field

Embodiments relate to apparatuses, methods and computer programs suitable for base station transceivers and mobile transceivers in a mobile communication system, more specifically, but not exclusively, to determining information related to granted resources based on a scheduling request and for determining uplink resources based on information related to granted resources.

Background

Demands for increasing the throughput of communication systems are steadily increasing. As connected devices, such as smartphones, computers, or streaming devices increase the amount of data transmitted due to a more widespread use and due to demand for more high quality services, a new category of devices is using an increasing share of the available bandwidth. The Internet of Things (IoT), which predominantly relies on Machine-to-Machine (M2M) communication, connects formerly unconnected devices, such as thermostats, household appliances, bio monitors etc. to communication systems, e.g. mobile communication systems.

Machine-to-Machine communication, especially Massive Machine-to-Machine communication (MMC) may increase the number of devices participating in communication systems. As such appliances partaking in MMC may be located in remote areas or may be mobile, MMC may also use mobile communication systems, e.g. General Packet Radio Service (GPRS), Universal Mobile Telecommunications System (UMTS) or Long Term Evolution (LTE). As, in many cases, no high quality content might be exchanged in MMC, but sparse data, such as instructions, sensory readings etc., data packets sent in MMC may comprise a small size, compared with data packets sent or received by smart phones or streaming clients.

US patent application US 2013/028221 A1 discloses a method and apparatus for transmitting and receiving a scheduling request using one of a plurality of shared resource based filtering methods. US 2012/281566 A1 discloses a method and apparatus to control a transition of a wireless transmit/receive unit from an idle state to a connected state. US 2013/250828 A1 discloses various schemes to improve scheduling request performance, based on adapting a scheduling request resource allocation based on a traffic pattern, e.g. QoS requirements. US 2013/294319 A1 discloses a radio communication system distinguishing between "normal" and "machine type" wireless communication. US 2015/023264 A1 discloses a combined explicit and implicit allocation of uplink resources on a control channel and an allocation of previously unused resources for further uplink control messages.

Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs suitable for base station transceivers and mobile transceivers in a mobile communication system. To reduce overhead and resources required for control transmissions while assigning and granting uplink resources for mobile transceivers, in at least some embodiments a base station transceiver may determine and broadcast a list of scheduling request indices to mobile transceivers associated with the base station transceiver. The list of scheduling request indices may be based on scheduling requests received from the mobile transceivers, and may be derived implicitly from a resource used by the scheduling request on an uplink control channel. A request index in the list of scheduling request indices may indicate that a resource has been granted to the mobile transceiver that transmitted the scheduling request associated with the request index. The position of the request index in the list of scheduling request indices may further indicate the resource granted to the mobile transceiver that has transmitted the scheduling request associated with the request index. The mobile transceiver may search the list of scheduling request indices for its request index and determine the uplink resource based on the position of its request index in the list of scheduling request indices.

Embodiments provide an apparatus suitable for a base station transceiver in a mobile communication system further comprising at least one mobile transceiver. The apparatus comprises a transceiver module to communicate with the at least one mobile transceiver using at least an uplink channel and a downlink broadcast channel. The uplink channel comprises a plurality of uplink resources. The apparatus further comprises a control module configured to control the transceiver module. The control module is further configured to receive information related to a scheduling request from the mobile transceiver and determine information related to a request index based on the information related to the scheduling request. The control module is further configured to determine information related to granted resources from the plurality of uplink resources comprising the information related to the request index and to transmit the information related to the granted resources to the at least one mobile transceiver via the downlink broadcast channel in response to the information related to the scheduling request. The request is associated with an uplink resource of the plurality of uplink resources. The transmission of the information related to the granted resources may reduce an overhead and transmission capacity required for a transmission of grants, and may reduce or eliminate individual grants sent to the mobile transceivers, e.g. for transmissions of small payloads. By adjusting parameters, e.g. a number of request indices used, tradeoffs regarding throughput performance and signaling overhead may be adjusted to improve performance of the system. Embodiments may further enable multiplexing of contention-based small payload traffic from multiple traffic classes, e.g. in mixed broadband/MMC scenarios, on the uplink resources without semi-static reservation of radio resources for the small payload traffic.

In various embodiments, the control module may be configured to broadcast information related to an association between a plurality of request indices and a plurality of scheduling requests, information related to an association between granted resources and the plurality of uplink resources, and/or information related to control resources to the at least one mobile transceiver. The information related to the association between the plurality of request indices and the plurality of scheduling requests may be used to identify a response to a scheduling request in the information related to the granted resources, the information related to the association between granted resources and the plurality of uplink resources may be used to identify an uplink resource to send payload information, and the information related to control resources may be used to identify the resources to use for transmitting the scheduling request and for receiving the information related to the granted resources.

In various embodiments, the transceiver module may be further configured to receive information related to a network payload from the one or more mobile transceivers via the uplink channel using one or more uplink resources from the plurality of uplink resources. The transceiver module may be further configured to transmit information related to an acknowledgement to the one or more mobile transceivers via the downlink broadcast channel. The control module may be further configured to determine the information related to the acknowledgement based on the information related to the network payload. The information related to the acknowledgement may be used to signal to a mobile transceiver, that the information related to the network payload has been received and forwarded, and may be used to indicate errors while receiving the information related to the network payload, e.g. because more than one mobile transceiver has used the same uplink resource as a collision of scheduling requests has not been detected.

In at least some embodiments, the plurality of uplink resources may comprise one or more subsets of uplink resources. The control module may be configured to determine a subset of the one or more subsets of uplink resources based on the information related to the scheduling request. The control module may be configured to determine the information related to the granted resources based on the subset. The control module may be further configured to broadcast information related to the one or more subsets of uplink resources via the transceiver module to the at least one mobile transceiver. The one or more subsets may be used to limit a search space for the mobile transceiver, when the mobile transceiver searches the information related to the granted resources for the request index, and may decrease the number of bits required for transmitting the request index.

In various embodiments, the information related to the granted resources may further comprise information related to a time offset associated with the information related to the request index. The control module may be further configured to determine the information related to the time offset based on the information related to the scheduling request and information related to a time window. The control module may be further configured to broadcast the information related to the time window via the transceiver module to the at least one mobile transceiver. The information related to the time offset may be used to transmit information related to scheduling grants for multiple time frames, e.g. to additionally reduce a messaging overhead and/or frames required for the transmission of the information related to the scheduling grants and/or to add additional flexibility for scheduling.

In at least some embodiments, the control module may be further configured to determine information related to a resource grant based on the information related to the scheduling request. The control module is further configured to transmit the information related to the resource grant via the transceiver module to the at least one mobile transceiver. The information related to the resource grant may be used to assign additional resources, or to allow a more flexible assignment of uplink resources of the plurality of uplink resources.

In various embodiments, the control module may be further configured to determine the information related to the granted resources based on information related to resource differentiation. The control module may be further configured to transmit the information related to the resource differentiation via the transceiver module to the at least one mobile transceiver. The information related to the resource differentiation may comprise information related to request index differentiation and/or information related to subset differentiation. The information related to resource prioritization may be used to allow a preferential treatment of services and/or mobile transceivers, e.g. to increase a Quality of Service (QoS), or to differentiate service quality tiers.

In various embodiments, the information related to the granted resources may comprise information related to a list of request indices of a plurality of request indices. The order of request indices in the list of request indices may indicate an assignment of uplink resources of the plurality of uplink resources to request indices of the group of request indices. Using the order of the request indices to indicate the assignment may reduce a transmission capacity required to transmit the information to the mobile transceivers.

Embodiments further provide an apparatus suitable for a mobile transceiver in a mobile communication system further comprising a base station transceiver. The apparatus comprises a transceiver module to communicate with the base station transceiver using at least an uplink channel and a downlink broadcast channel. The uplink channel comprises a plurality of uplink resources. The apparatus further comprises a control module configured to control the transceiver module. The control module is further configured to determine information related to a scheduling request, transmit the information related to the scheduling request to the base station transceiver and determine information related to a request index based on the information related to the scheduling request. The control module is further configured to receive information related to granted resources from the base station transceiver via the downlink broadcast channel in response to the information related to the scheduling request, the information related to the granted resources comprising the information related to the request index. The control module is further configured to determine an uplink resource based on the information related to the granted resources and the information related to the scheduling request. The request index is associated with an uplink resource. In other words, as a consequence of the associations and the signaling, the uplink resource is associated with a request index. The transmission of the information related to the granted resources instead of individual grants may reduce an overhead and transmission capacity required for a transmission of grants, and may reduce or eliminate individual grants sent to the mobile transceivers, e.g. for transmissions of small payloads. By adjusting parameters, e.g. a number of request indices used, tradeoffs regarding throughput performance and signaling overhead may be adjusted to improve performance of the system. Embodiments may further enable multiplexing of contention-based small payload traffic on the uplink resource without reservation of radio resources for the small payload traffic.

In various embodiments, the control module may be configured to obtain broadcast information related to an association between a plurality of request indices and a plurality of scheduling requests, and information related to an association between granted resources and the plurality of uplink resources from the base station transceiver. The control module may be configured to obtain broadcast information related to control resources from the base station transceiver. The control module may be further configured to determine the information related to the scheduling request based on the information related to the control resources and to control the reception of the information related to the granted resources based on the information related to the control resources. The information related to the association between the plurality of request indices and the plurality of scheduling requests may be used to identify a response to a scheduling request in the information related to the granted requests, the information related to the association between granted resources and the plurality of uplink resources may be used to identify an uplink resource to send payload information, and the information related to control resources may be used to identify the resources to use for transmitting the scheduling request and for receiving the information related to the granted requests.

In at least some embodiments, the control module may be configured to determine the uplink resource based on the information related to the scheduling request, the information related to the granted resources, the information related to the association between the plurality of request indices and the plurality of scheduling requests and the information related to the association between the granted resources and the plurality of uplink resources. The control module may be further configured to control a transmission of information related to a network payload via the transceiver module based on the information related to the uplink resource. The transmission of the information related to the network payload may allow the mobile transceiver to transmit payload information, e.g. for Massive Machine Communication (MMC) transmissions to an application server connected to the network.

In various embodiments, the plurality of uplink resources may comprise one or more subsets of uplink resources. The control module may be further configured to obtain information related to the one or more subsets of uplink resources via the transceiver module from the base station transceiver. The control module may be configured to determine the uplink resource based on the information related to the one or more subsets of uplink resources. The one or more subsets may be used to limit a search space for the mobile transceiver, when the mobile transceiver searches the information related to the granted request for the request index.

In at least some embodiments, the information related to the granted resources may further comprise information related to a time offset associated with the information related to the request index. The control module may be further configured to obtain broadcast information related to a time window via the transceiver module from the base station transceiver. The control module may be configured to determine a transmission time offset based on the information related to the time offset and the information related to the time window. The control module may be configured to transmit the information related to the network payload based on the transmission time offset. The information related to the time offset may be used to transmit information related to scheduling grants for multiple time frames, e.g. to additionally reduce a messaging overhead and/or frames required for the transmission of the information related to the scheduling grants and/or to add additional flexibility for scheduling.

In various embodiments, the control module may be further configured to obtain information related to a resource grant via the transceiver module from the base station transceiver. The control module may be further configured to determine the uplink resource based on the information related to the resource grant. The information related to the resource grant may be used to assign additional resources, or to allow a more flexible assignment of uplink resources of the plurality of uplink resources.

In at least some embodiments, the control module may be further configured to obtain information related to resource differentiation via the transceiver module from the base station transceiver. The control module may be configured to determine the information related to the scheduling request based on the information related to the resource differentiation. The information related to the resource differentiation may comprise information related to request index differentiation and/or information related to subset differentiation. The information related to resource prioritization may be used to allow a preferential treatment of services and/or mobile transceivers, e.g. to increase a Quality of Service (QoS), or to differentiate service quality tiers.

In various embodiments, the information related to the granted resources may comprise information related to a list of request indices of a plurality of request indices. The order of request indices in the list of request indices may indicate an assignment of uplink resources of the plurality of uplink resources to request indices of the group of request indices. The control module may be configured to search the list of the request indices based on the information related to the request index and to determine the uplink resource based on a position of the request index in the list of request indices. Using the order of the request indices to indicate the assignment may reduce a transmission capacity required to transmit the information to the mobile transceivers.

Embodiments further provide a method suitable for a base station transceiver in a mobile communication system further comprising at least one mobile transceiver. The method comprises communicating with the at least one mobile transceiver using at least an uplink channel and a downlink broadcast channel. The uplink channel comprises a plurality of uplink resources. The method further comprises receiving information related to a scheduling request from the mobile transceiver and determining information related to a request index based on the information related to the scheduling request. The method further comprises determining information related to granted resources from the plurality of uplink resources comprising the information related to the request index and transmitting the information related to the granted resources to the at least one mobile transceiver via the downlink broadcast channel in response to the information related to the scheduling request. The request index is associated with an uplink resource of the plurality of uplink resources.

Embodiments further provide a method suitable for a mobile transceiver in a mobile communication system further comprising a base station transceiver. The method comprises communicating with the base station transceiver using at least an uplink channel and a downlink broadcast channel. The uplink channel comprises a plurality of uplink resources. The method comprises determining information related to a scheduling request, transmitting the information related to the scheduling request to the base station transceiver, and determining information related to a request index based on the information related to the scheduling request. The method further comprises receiving information related to granted resources from the base station transceiver via the downlink broadcast channel in response to the information related to the scheduling request. The information related to the granted resources comprises the information related to the request index. The method further comprises determining an uplink resource based on the information related to the granted resources and the information related to the scheduling request. The request index is associated with an uplink resource of the plurality of uplink resources.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which:

Fig. 1 illustrates a block diagram of an embodiment of an apparatus suitable for a base station transceiver;

Fig. 2 illustrates a timing diagram for scheduling request based transmission of an uplink packet using an uplink scheduling grant sent in the downlink;

Fig. 3 illustrates a block diagram of an embodiment having 1, 2 or 4 subsets;

Fig. 4 illustrates an uplink throughput of small packet traffic versus offered load;

Fig. 5    illustrates a downlink signaling overhead in terms of payload bits required for uplink grants sent in the downlink and implicit downlink ACK/NACKs dependent on the parameter K;

Fig. 6    illustrates an embodiment using a time offset;

Fig. 7    illustrates an embodiment using fully flexible grants;

Fig. 8    illustrates different UR configurations over time and frequency;

Fig. 9    illustrates a block diagram of an embodiment of an apparatus for a mobile transceiver;

Fig. 10    illustrates a transaction diagram of a base station transceiver and a mobile transceiver;

Fig. 11    illustrates a flow chart of an embodiment of a method for a base station transceiver; and

Fig. 12    illustrates a flow chart of an embodiment of a method for a mobile transceiver.

Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.
Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.
As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.
The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.
Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.
In the design of future 5th generation (5G) networks, designing more efficient solutions for control and data transmission, primarily in the context of Massive Machine Communication (MMC) using a wireless broadband system may be a focus.
MMC is expected to create a large amount of traffic volume in future wireless networks, in particular involving small payload packets. An issue with small packets in current wireless broadband systems such as Long Term Evolution (LTE) may be that the signaling overhead may be large compared to the payload, thus making the transmission of small payload packets very inefficient.
It is assumed that efficient MMC techniques may be integrated into a wireless broadband system. The MMC devices may be typically low-cost and their functionality may be reduced as compared to a conventional user equipment (smart phone, tablet, etc.). Also the power consumption of MMC devices may be reduced by adequate design of the air interface.
A multi-carrier system may be assumed (Orthogonal Frequency Division Multiplexing (OFDM), Universal Filtered Multi-Carrier (UFMC), Single Carrier Frequency Division Multiple Access (SC-FDMA), Filter Bank Multi Carrier (FBMC), etc.) with resource allocation in Transmission Time Intervals (TTI) and frequency resources (subcarriers or resource blocks similar to LTE).

In various embodiments, it may be assumed that (typically after a random access procedure) a User Equipment (UE, also mobile transceiver) may be known by the network, has exchanged a short UE Identifier (e.g. 16bit Cell Radio Network Temporary Identifier (C-RNTI)) and an Uplink (UL) may be time-synchronized (e.g. within accuracy of a cyclic prefix). However, also embodiments using asynchronous uplink transmissions may be applied.

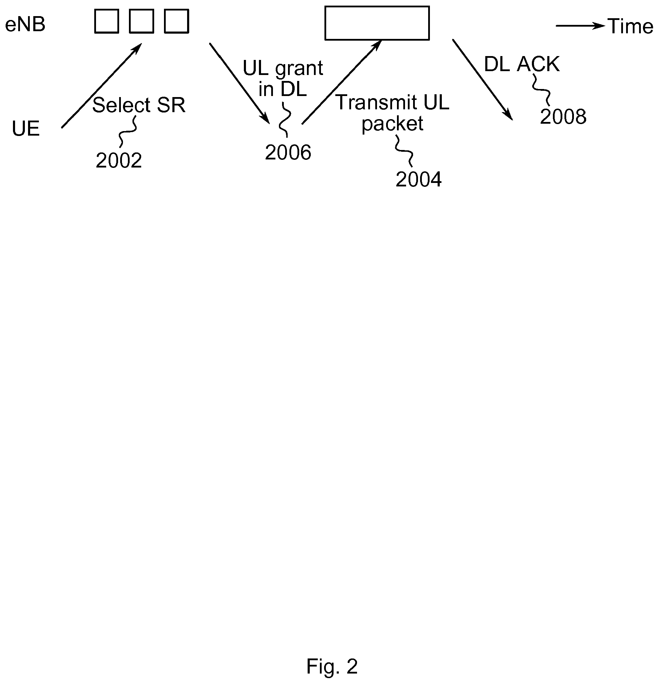

In LTE, a device may be assigned periodic contention-free resources of a shared Scheduling Request (SR) channel. In LTE these SRs may be carried on an UL control channel (e.g. Physical Uplink Control Channel (PUCCH)). If the device has data to transmit, it waits for its SR window and transmits an SR, then receives a user-specific UL scheduling grant in DL and then transmits UL data, as illustrated in Fig. 2. Fig. 2 illustrates a timing diagram for a SR 2002 based transmission (periodic as in LTE, or contention-based) of an UL packet 2004 using an uplink scheduling grant 2006 sent in the downlink (full scheduling grants as in LTE, or implicitly tagged to uplink resource) and downlink Acknowledgements / Negative Acknowledgements (ACK/NACK) 2008 (tagging to UL packet via UL grant as in LTE, or tagged implicitly to the UL resource used).

In existing solutions, the uplink transmission of a small packet may hence require a full scheduling grant on the control channel (e.g. Downlink Control Information (DCI) on the Physical Downlink Control Channel (PDCCH) of LTE). This may involve a high signaling overhead, while not all the benefits of a full scheduling grant might be harvested, as e.g. the buffer filling of the device might not be known.

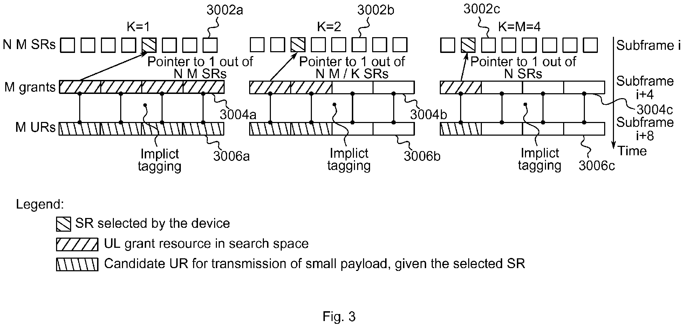

Basic idea of embodiments, as illustrated in Fig. 3, may be to combine an (1bit) Scheduling Request (SR) 3002a; 3002b; 3002c; signaling in the uplink with low-overhead uplink grants 3004a; 3004b; 3004c; sent in the downlink (with timing as shown in Fig. 2, wherein the devices may contend for Uplink Resources (UR) via the SRs, and wherein the radio resources used for conveying an uplink grant sent in the downlink may be implicitly tagged to a respective UR 3006a; 3006b; 3006c, and wherein the device that is granted the uplink transmission on a certain UR may be identified via an index to the SR previously applied. Further embodiments may relate to additional DL signaling of timing relations, usage of at least different grant types, and service differentiation. The difference between the diagrams with suffixes a, b and c is the number of subsets as defined below, wherein a is partitioned using 1 subset, b 2 subsets and c 4 subsets.

Embodiments may be different from the implicit signaling used with Cell-Forward Access Channel (FACH) of High Speed Packet Access (HSPA) in Release 8, where in contrast the radio resources used for conveying an "UL grant" sent in the downlink (i.e. ACK on an Acquisition Indicator Channel (AICH)) may be implicitly tagged to a respective SR (i.e. using Random Access Channel (RACH) preamble), and wherein the UR may be identified via an index to the UR (i.e. Extended Acquisition Indicator = offset pointer).

In other words, in embodiments, a device may transmit an SR, or information related to a scheduling request 210 as introduced subsequently, to contend for one out of M URs, or uplink resources from a plurality of uplink resources as introduced subsequently, and it may then carry out M "blind searches" (i.e. with simpler processing than the blind searches known from PDCCH) for the possible M URs, whereas with Enhanced Cell FACH, the tagging may be differently defined so as not to require any blind searches. The advantage of the proposed solution may be a reduced downlink signaling overhead, which may be a major requirement for MMC (K = 1 subsets assumed, current solutions with one blind search):

$$M \; x \; log2(NM) \; bits \; (\text{with M blind searches}) \; < \; NM \; log2(M) \; bits$$

A further distinctive feature of embodiments may be that the downlink signaling overhead might be further reduced by partitioning the set of M URs into K > 1 subsets. This may allow balancing a downlink signaling overhead with a small packet throughput on the uplink.

The SRs may be user-specific and scheduled periodically as in LTE, or the SRs may be contention-based. In UL the payload, or information related to network payload 230, may be transmitted together with the UE ID and/or a transport format indicator. The latter may allow the device to adapt modulation and coding scheme, e.g. according to downlink Signal to Noise Ratio (SNR) measured using a downlink pilot (e.g. Cell Specific Reference Signals (CS-RS)). A packet transmitted in UL using one of the available URs may be typically acknowledged in DL via implicit ACK/NACK, which may correspond to the information related to an acknowledgement 140 as introduced subsequently, (i.e. the radio resources used for sending the ACK/NACK may be implicitly tagged to the respective UR).

Embodiments may be tuned via parameters so as to enable a trade-off between uplink throughput performance and downlink signaling overhead:

- M denotes the number of URs per subframe,
- $N \cdot$ M denotes the maximum number of SRs per subframe ($N$ is an over-provisioning factor),
- K denotes the number of subsets of the URs, i.e. the set of M URs is subdivided into K subsets, with (approximately) *M/K* URs each.

The introduction of a tuning factor K is a further extension beyond current solutions and may enable service differentiation, e.g. based on information related to a resource differentiation as introduced subsequently.

- A SR may contend for one of the *M/K* available URs within a subset.
- For each of the M URs, there may be an implicit UL grant sent in DL identifying one out of $N \cdot M/K$ SRs (i.e. M grants where a grant requires $\lceil log2(N \, M \, / \, K) \rceil$ bits).
- A mobile transceiver that has sent out an SR may decode *M/K* UL grants on the DL (i.e. *M/K* blind searches per SR).

Special cases:

- $K = 1$: a SR may contend for any out of the M URs (M blind searches). This may improve a throughput performance and increase a DL signaling overhead (M grants, each using $\lceil log2(N \cdot M) \rceil$ bits).
- $K = $ M: a SR may contend for exactly one out of the M URs (1 blind search). This may lead to a decreased throughput performance and decrease the DL signaling overhead (M grants, each using $\lceil log2(N) \rceil$ bits).

In contrast to existing scheduling request mechanisms, a basic idea may be to introduce a smart scheme that may arbitrarily combine two different implementation options for scheduling requests namely

- Scheduling request for pooled uplink resources (*e. g.* $K = 1$). Here the scheduler may assign one out of a set of M available uplink resources. This is very flexible, but may require more downlink signaling.
- Scheduling request for tagged uplink resources (e.g. $K = $ M). With the choice of a specific scheduling request it may be already clear which uplink resource may be used for the subsequent data transmission. This may be highly efficient with respect to required feedback signaling, but less flexible.

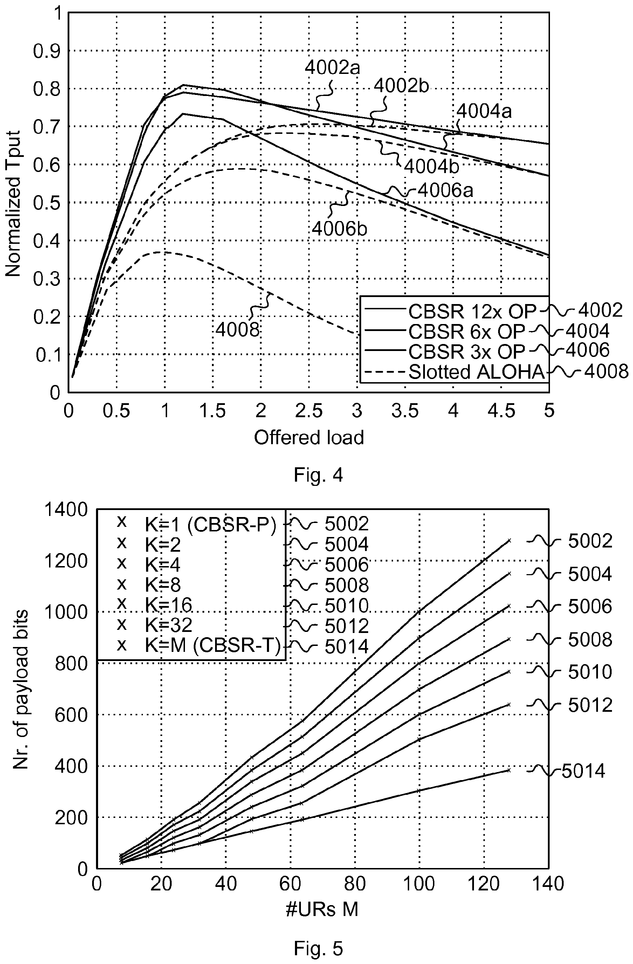

For fixed M and *N,* UL throughout and DL signaling overhead might be tuned via the parameter *K* as illustrated in Figs. 4 and 5 for contention-based SR, respectively. Fig. 4 illustrates an uplink throughput of small packet traffic versus offered load for K=1 (solid lines, 4002a, 4004a, 4006a) and K=M (dashed lines, 4002b, 4004b, 4006b) for a contention-based SR mechanism:

- Up to 25 URs of ~125bytes (4 LTE Physical Resource Blocks (PRBs)), 20MHz LTE UL
- $N = 3$ (4006(a/b)), 6 (4004(a/b)), 12 (4002(a/b))
- SRs on the Physical Uplink Control Channel (PUCCH) (up to 18 SRs per PRB), UL signaling overhead taken into account

The measurements are contrasted with slotted ALOHA 4008.

Fig. 5 illustrates a downlink signaling overhead in terms of payload bits required for uplink grants sent in the downlink and implicit downlink ACK/NACKs dependent on the parameter K = 1 5002, 2 5004, 4 5006, 8 5008, 16 5010, 32 5012, M 5014, versus the number of URs.

The parameters *M, N, K,* as well as the configuration of SRs and URs (e.g. size and position of the URs) may be pre-defined or may be signaled via system information broadcast (or user-specific signaling), e.g. by broadcasting information related to an association between a plurality of request indices and a plurality of scheduling requests 110, information related to an association between granted resources and the plurality of uplink resources 112, information related to control resources 114, information related to one or more subsets of uplink resources 116, information related to a time window 118, and/or information related to resource differentiation 119 as introduced subsequently. The signaled case may enable to adapt the configuration according to load conditions, e.g. reduce K with increasing UL traffic volume of small payloads, and increase K with increasing DL traffic volume of mobile broadband users. The flexible signaling of parameters *M, N,* and *K* may be a further improvement beyond current systems.

Embodiments may improve performance compared to Slotted ALOHA as UL resources may be scheduled, so UL resources not used for small payloads may be used for scheduling mobile broadband traffic.

It may be assumed that if two or more devices simultaneously select the same SR, the base station receiver might not be able to detect a collision. However, by means of smart signal processing, this might be resolved to some extend and may reduce collision probabilities of the data packets.

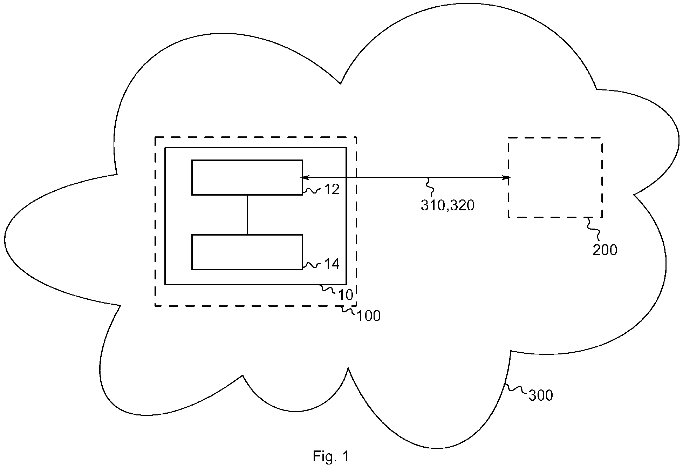

Fig. 1 illustrates a block diagram of an embodiment of an apparatus 10 suitable for a base station transceiver 100 in a mobile communication system 300 further comprising at least one mobile transceiver 200.

In general, the mobile communication system 300 may, for example, correspond to one of the Third Generation Partnership Project (3GPP)-standardized mobile communication networks, where the term mobile communication system is used synonymously to mobile communication network. The mobile or wireless communication system 300 may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver, e.g. the base station transceiver 100, can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver, e.g. the mobile transceiver 200 may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, a sensor node, a connected appliance, a node in the Internet of Things (IoT) etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

The apparatus 10 comprises a transceiver module 12 to communicate with the at least one mobile transceiver 200 using at least an uplink channel 310 and a downlink broadcast channel 320. The uplink channel 310 comprises a plurality of uplink resources.

In at least some embodiments, the uplink channel 310 may be used to transmit a signal from the at least one mobile transceiver 200 to the base station transceiver 100. The downlink broadcast channel 320 may be used to transmit a signal from the base station transceiver 100 to the at least one mobile transceiver 200. In various embodiments, wherein the at least one mobile transceiver 200 corresponds to at least two mobile transceivers, the downlink broadcast channel 320 may be used to transmit information to the at least two mobile transceivers. The downlink broadcast channel may comprise a plurality of downlink resources. In various embodiments, an uplink signal on the uplink channel 310 may be transmitted using the plurality of uplink resources, and a downlink signal on the downlink channel 320 may be transmitted using the plurality of downlink resources.

In at least some embodiments, an uplink resource and/or a downlink resource may correspond to at least one element of the group of a time resource, a carrier frequency resource, a code resource, and a spatial resource. In at least some embodiments, a time resource may correspond to at least one element of the group of a radio frame, a radio subframe, a radio slot, a radio subslot, and a radio symbol. A carrier frequency resource may correspond to at least one element of the group of a frequency carrier, a frequency subcarrier, an Orthogonal Frame Division Multiplexing (OFDM) subcarrier etc. A code resource may correspond to at least one element of the group of a spreading code, a Zadoff-Chu sequence, a channelization code, a scrambling code, an interleaving sequence, and an Orthogonal Variable Spreading Factor (OVSF) code. A spatial resource may correspond to at least one element of the group of a spatial channel, a spatial subchannel, an antenna, a beam, a polarization direction, a spatial multiplexing channel, and a spatial multiplexing subchannel.

In at least some embodiments, an uplink resource of the plurality of uplink resources may be used to transmit a short sequence of bits or a larger sequence of payload bits per timeframe. In at least some embodiments, the uplink channel 310 may correspond to a random access uplink channel.

The transceiver module 12, and correspondingly the transceiver module 22 as will be introduced in the sequel, may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The apparatus 10 further comprises a control module 14 configured to control the transceiver module 12. The transceiver module 12 is coupled to the control module 14. The control module 14 is further configured to receive information related to a scheduling request 210 from the mobile transceiver 200, wherein the control module 14 is configured to receive the information related to the scheduling request using an uplink resource of the plurality of uplink resources or using further uplink resources on another uplink channel, and to determine information related to a request index based on the information related to the scheduling request 210. In at least some embodiments, the information related to the scheduling request may correspond to a single bit or a short sequence of bits. In at least some embodiments, the uplink channel 310 comprising the plurality of uplink resources may be used for both the information related to the scheduling request 210 and for information related to a network payload 230 as introduced subsequently. Additionally or alternatively, the uplink channel 310 may correspond to a first uplink channel and the plurality of uplink resources may correspond to a first plurality of uplink resources in some further embodiments. In such an embodiment, there may be a second uplink channel comprising a second plurality of uplink resources, being different from or even non-overlapping with the first plurality of uplink resources. The first uplink channel may then be used for transmitting the information related to the network payload 230, and the second uplink channel may then be used for transmitting the information related to the scheduling request 210. In various embodiments, the control module 14 may use the uplink resource used to transmit the information related to scheduling request, e.g. on a contention-based uplink channel (e.g. similar to LTE Random Access Channel), wherein the mobile transceivers may be synchronized (dissimilar to LTE RACH), to determine the information related to the request index. Alternatively or additionally, the control module 14 may use a scheduled uplink resource used to transmit the information related to the scheduling request, e.g. on a non-contention based uplink channel (similar to LTE SR), to determine the information related to the request index. Alternatively or additionally, the information related to the scheduling request may comprise the information related to the request index. The information related to the request index may be used to enumerate a plurality of request indices for the plurality of uplink resources. In various embodiments, the enumeration of the plurality of request indices may be based on the number of uplink resources of the plurality of uplink resources or on a multiple of the number of uplink resources of the plurality of uplink resources, e.g. based on an over-provisioning multiplying factor.

The control module 14 is further configured to determine information related to granted resources 120 from the plurality of uplink resources comprising the information related to the request index and to transmit the information related to the granted resources 120 to the at least one mobile transceiver 200 via the downlink broadcast channel 320, in response to the information related to the scheduling request 210. The request index is associated with an uplink resource of the plurality of uplink resources. In at least some embodiments, the information related to the granted resources 120 may comprise information related to a list of request indices of a plurality of request indices, wherein the order of request indices in the list of request indices indicates an assignment of uplink resources of the plurality of uplink resources to request indices of the group of request indices. The control module 14 may choose an order of the request indices in the list randomly or based on an increasing or decreasing order of the request indices of the scheduling requests, for example. In various embodiments, the list of request indices may correspond to a concatenation of request indices, e.g. separated using a delimiter, or to a string of request indices in a specified format, e.g. with specified field lengths. In at least some embodiments, the list of request indices may comprise a variable length. In various embodiment, the information related to the granted resources 120 may correspond to a network packet transmitted on the downlink broadcast channel 320, comprising the list of request indices in bit format. In various embodiments, empty positions in the list may be represented by a default or reserved value, wherein the default or reserved value may comprise the same number of bits or less as a request index. Alternatively or additionally, the control module 14 may transmit the information related to the granted resources 120 using a plurality of downlink resources, wherein the list of request indices may be distributed across the plurality of downlink resources. The uplink resource associated with the request index may be derived from the downlink resource used for the transmission of the request index. In various embodiments, the information related to granted resources 120 may comprise information related to an uplink time adjustment, information related to a modulation and/or information related to coding scheme.

In embodiments the control module 14, and correspondingly the control module 24 as will be introduced in the sequel, may be implemented using one or more processing units, one or more processing devices, any means for processing, such as a processor, a computer or a programmable hardware component being operable with accordingly adapted software. In other words, the described functions of the control modules 14, 24 may as well be implemented in software, which is then executed on one or more programmable hardware components. Such hardware components may comprise a general purpose processor, a Digital Signal Processor (DSP), a micro-controller, etc.

In at least some embodiments, the control module 14 may be configured to broadcast information related to an association between a plurality of request indices and a plurality of scheduling requests 110, information related to an association between granted resources and the plurality of uplink resources 112, and/or information related to control resources 114 to the at least one mobile transceiver 200. The information related to the association between the plurality of request indices and the plurality of scheduling requests 110 may be used to determine the information related to the request index, and may comprise a look-up table and/or computation formula, e.g. based on offsets to define the association. The information related to the association between the granted resources and the plurality of uplink resources 112 may be used to determine the uplink resource to be used for transmitting payload information, and may comprise a look-up table and/or a computation formula, e.g. based on offsets, to define the association. The information related to the control resources 114 may be used to control the transmission and/or reception of the information related to the scheduling request 210 and/or the information related to the granted resources 120, and may comprise information related to uplink resources and/or downlink resources to be used for transmitting/receiving control information, e.g. the information related to the scheduling request 210 and/or the information related to the granted resources 120. The information related to the control resources 114 may further comprise information related to a transmission format and/or a transmission order and offsets for transmitting the control information.

In at least some embodiments, the transceiver module may be further configured to receive information related to a network payload 230 from the one or more mobile transceivers 200 via the uplink channel 310 using one or more uplink resources from the plurality of uplink resources and to transmit information related to an acknowledgement 140 to the one or more mobile transceivers 200 via the downlink broadcast channel 320. The control module may be further configured to determine the information related to the acknowledgement 140 based on the information related to the network payload 230. In embodiments, the information related to the network payload may correspond to a sequence of bit values to be sent from the at least one mobile transceiver 200 to a device comprised in the mobile communication system 300 and/or connected to the mobile communication system 300. In at least some embodiments, the information related to the network payload may comprise machine-to-machine communication and/or the information related to the network payload may be comprised in a network package. The control module 14 is further configured to determine the information related to the acknowledgement based on the information related to the network payload. In at least some embodiments, the information related to the acknowledgement may be based on information related to a checksum comprised in the information related to the network payload and/or information related to garbled data in one or more uplink resources of the plurality of uplink resources.

In various embodiments, the plurality of uplink resources may comprise one or more subsets of uplink resources. The control module 14 may be configured to determine a subset of the one or more subsets of uplink resources based on the information related to the scheduling request 210. The control module 14 may be configured to determine the information related to the granted resources 120 based on the subset. The control module 14 may be further configured to broadcast information related to the one or more subsets of uplink resources 116 via the transceiver module 12 to the at least one mobile transceiver 200. In embodiments, a subset of the one or more subsets may comprise at least one uplink resource based on a distribution scheme. In various embodiments, an uplink resource of the plurality of uplink resource may be comprised in a subset. In embodiments, a mapping of information related to the scheduling request to the subsets of uplink resources may be disjunctive, or may overlap, e.g. the request indices may be mapped to the one or more subsets of uplink resources, e.g. a request index of the one or more request indices may be mapped to one subset (disjunctive), or may be mapped to one or more subsets (overlap). Such an overlap may be used for service differentiation as described subsequently, for example. The control module 14 may be configured to determine the information related to the granted resources 120 based on a mapping of a request index associated with the information related to the scheduling request 210 to a subset of the one or more subsets. The information related to the one or more subsets may comprise information related to the distribution scheme, and may be used to search for the request index in the mobile transceiver as described subsequently. In at least some embodiments, the information related to the request index may comprise the request index relative to the associated subset, e.g. the information related to the request index may comprise less bits in a bit format than an absolute representation of the request index.

In at least some embodiments, the information related to the granted resources 120 may further comprise information related to a time offset associated with the information related to the request index. The control module 14 may be further configured to determine the information related to the time offset based on the information related to the scheduling request 210 and information related to a time window. The control module 14 may be further configured to broadcast the information related to the time window 118 via the transceiver module 12 to the at least one mobile transceiver 200. In various embodiments, the information related to the time offset may comprise information related to a time relative to a current timeframe or subframe, relative to a predicted timeframe or subframe, or an absolute timeframe or subframe. In various embodiments, the information related to the time offset may be concatenated with the information related to the request index, or the information related to the granted resources 120 may comprise a plurality of lists of request indices, wherein a list of the plurality of lists is associated with a time offset as indicated by the information related to the time offset. In embodiments, the information related to the time window may comprise information related to time frames or subframes indicated by the information related to the time offset. The information related to the time window may comprise information related to a bit length of a binary representation of the information related to the time window, for processing by the at least one mobile transceiver 200.

In previous embodiments, a fixed, pre-defined timing relation was assumed between transmission of SR in UL and UL grant in DL, e.g. UL grant may be transmitted ~4ms after SR, and UL packet may be transmitted ~4ms after UL grant; this may be a reasonable assumption for LTE evolution.

The number of SRs received per subframe may be time-variant, and in some subframes the number of received SRs may be > M (i.e. some devices may be barred from uplink transmission), while in other subframes there may be received less than M SRs (i.e. there may be uplink resources available that could be used to schedule some or all of those previously barred devices).

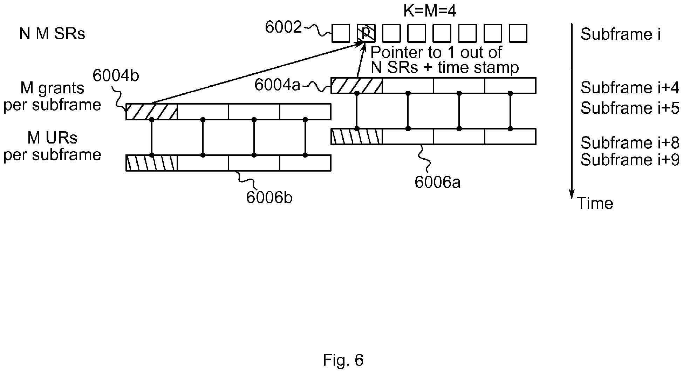

To enable this, the information related to the granted resources 120 may comprise some information that defines the timing relation between SR in the uplink and an uplink grant in the downlink, e.g. the information related to the time offset, i.e. a device scanning the information related to the granted resources 120 may check whether it finds a request index of the SR it has previously transmitted, by checking both the SR index and the timing relation. Fig. 6 illustrates an embodiment using information related to the time offset. Fig. 6 shows a scheduling request 6002, which may correspond to the information related to the scheduling request 210, in subframe i as request index in a plurality of request indices. Fig 6 further shows the information related to the granted resources 6004a, which may correspond to the information related to the granted resources 120 in, subframe i+4 and 6004b in subframe i+5 and the resulting uplink resources 6006a in subframe i+8 and 6006b in subframe i+9. Embodiment may use a (e.g. 1bit) time offset comprised in the information related to the granted resources 6004a with parameters M = 4, N = 2, K = M = 4 and W = 2, where W may correspond to the information related to the time window. A mobile transceiver sending a SR in subframe i may receive an implicit UL grant comprised in the information related to the granted resources 6004a in subframe i+4 if the time offset = 0, or in subframe i+5 if time offset = 1.

Example using an explicit time offset:

- $M = 24, N = 3, K = 1, W = 2$.
- a UL grant of the information related to the granted resources may comprise $\lceil log2(N\,M)\rceil = 7$ bits pointing to one of the 72 request indices for the SRs.
- UL grant may further comprise $log2(W)$ bits time offset, e.g. 1 bit time offset (0...1) to define a time window of size W = 2, consisting of W subframes in which to check the UL grants (e.g. subframes i+4 and i+5).
- Mobile transceiver may send a SR with request index $p$ in subframe $i$.
- 4ms later, in subframe i+4, the mobile transceiver may scan $M$ scheduling grants in the information related to the granted resources 6004a and if it finds the request index $p$, together with time offset 0, it may send the information related to the network payload in subframe i+8.
- Otherwise, in sub frame $i + 5$, the mobile transceiver may again scan $M$ scheduling grants in the information related to the granted resources 6004b and if it finds request index p, together with time offset 1, it may send the information related to the network payload in subframe i+9.
- Otherwise it will send a SR again, e.g. with some random delay depending on a backoff-parameter.

Example without an explicit time offset:

- M = $24, N = 3, K = 1, W = 2$.
- a UL grant of the information related to the granted resources may comprise $\lceil log2(W\,N\,M)\rceil = 8$ bits that may define 144 SRs, of which 72 SRs (0...71) may be granted in subframe i+4 and the other 72 SRs (72...143) may be granted in subframe i+5.

While in the above examples, the time window may comprise W contiguous subframes, the time window may also comprise W subframes with a spacing of S subframes. The two parameters W and S may be predefined or be signaled via system information broadcast or dedicated signaling.

In various embodiments, the control module 14 may be further configured to determine information related to a resource grant 122 based on the information related to the scheduling request 210. The control module 14 may be further configured to transmit the information related to the resource grant 122 via the transceiver module 12 to the at least one mobile transceiver 200. In at least some embodiments, the information related to the resource grant may comprise information related to an uplink resource to be used for an uplink transmission. The information related to the resource grant may comprise at least one element of the group of a physical resource, a PRB, a modulation, an index of an uplink resource, or a pointer to a sub-component of a resource. The information related to the resource grant 122 may comprise information related to an uplink resource of the plurality of uplink resources, or may comprise information related to a different uplink resource on the uplink channel 310 or on another uplink channel.

Embodiments may allow to use at least two different types of UL scheduling grants together, e.g. the information related to the granted resources 120 and the information related to the resource grant 122:

- If used with the user-specific dedicated SRs of LTE, the scheme may use the implicitly tagged UL grants in DL per subframe (the information related to the granted resources 120) as described above (as first grant type), and additionally (small) uplink packets may be scheduled via an LTE uplink scheduling mechanism by transmitting the uplink grant in a DCI in the PDCCH, e.g. of the same or another subframe (as second grant type information related to a resource grant 122). This may be useful when in a subframe more than $M$ SRs were received, so that user may receive UL grant with some delay without sending another SR.

- A scheme using $M$ implicitly tagged UL grants with $\lceil log2(N M / K) \rceil$ bits comprised in the information related to the granted resources 120 with $K > 1$, as described above (as first grant type), may be combined with a number of further "fully-flexible UL grants in DL" (as second grant type information related to the resource grant), where the latter may use e.g. $\lceil log2(N M) \rceil$ bits to identify one out of $N . M$ SRs, plus $\lceil log2(M) \rceil$ bits to identify one out of the M URs. This may be useful if for a certain subset of URs more than $M/K$ SRs were received, so that some of the devices sending out those SRs may be scheduled via the grants using $\lceil log2(N M) \rceil$ bits.

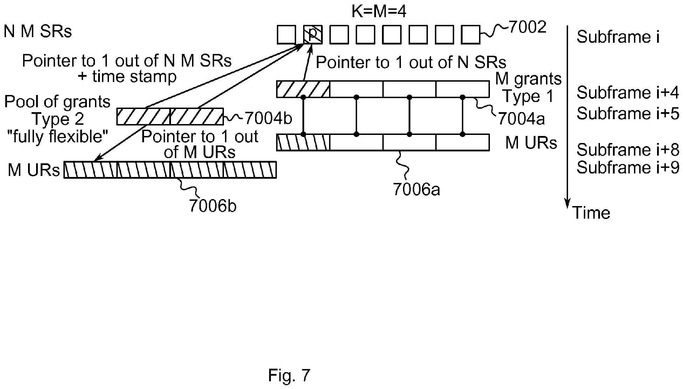

- The second grant type, e.g. the "fully-flexible UL grants in DL" which may correspond to the information related to the resource grant as described above, may additionally carry information concerning a timing relation between SR and UL scheduling grant, as described above. An example embodiment is illustrated in Fig. 7.

Fig. 7 illustrates an embodiment using fully flexible grants. Fig. 7 shows a scheduling request 7002, which may correspond to the information related to the scheduling request 210, in subframe i as request index in a plurality of request indices. Fig 7 further shows the information related to the granted requests 7004a, which may correspond to the information related to the granted resources 120, in subframe i+4 and the information related to the resource grant 7004b in subframe i+5 and the resulting uplink resources 7006a in subframe i+8 and 7006b in subframe i+9. $M = 4$, $N = 2$: Grant Type 1 7004a, e.g. the information related to the granted resources 120, may be an implicit grant e.g. tagged to one of the URs ($K = M = 4$), and grant Type 2 7004b may be a fully flexible grant, e.g. the information related to the resource grant 122, with a (optional) time offset explicitly pointing to one of the M URs. For example, a mobile transceiver may send an SR with request index $p$ in subframe i and may first search for SR index $p$ in the implicit UL grant type 1 in subframe i + 4: if found, then it can transmit in the tagged UR in subframe i + 8. Else the device may search for SR index $p$ in the grant type 2 in subframe i + 4 (grant type 2 = pointer to $p$, pointer to UR, time offset =0): if found, then it may transmit in the granted UR in subframe i + 8. Else the device may search for the SR request index $p$ in the grant type 2 in subframe i + 5 (grant type 2 = pointer to $p$, pointer to UR, time offset =1). If found, it can transmit the information related to the network payload 230 in the granted UR in subframe $i$ + 9.

In various embodiments, the control module 14 may be further configured to determine the information related to the granted resources 120 based on information related to resource differentiation 119. The control module 14 may be further configured to transmit the information related to the resource differentiation 119 via the transceiver module 12 to the at least one mobile transceiver 200. The information related to the resource differentiation 119 may comprise information related to request index differentiation and/or information related to subset differentiation. In at least some embodiments, the information related to request index differentiation may be used to partition the request indices of the information related to the scheduling request 210 into two or more groups, and the groups may have access to different (or different and overlapping) uplink resources. In various embodiments the information related to subset differentiation may be used to partition the subsets into two or more groups, and the groups may have access to different (or different and overlapping) uplink resources.

In various embodiments, the over-provisioning of SRs may be utilized to differentiate between several services, e.g. to implement a prioritization scheme. The $P = N \times M/K$ SRs associated with $M/K$ URs may be separated in e.g. two sets of SRs (overlapping or disjunctive) of sizes $P_1$ and $P_2$, where $P_1 + P_2 \geq P$. Each mobile transceiver, e.g. the at least one mobile transceiver 200 may belong to one out of two groups, or may choose one out of the two groups based on the service for which the information related to the network payload is to be transmitted, where one group may represent high priority mobile transceivers or services and the second group may represent default mobile transceivers or services. There may be a biunique assignment between the mobile transceiver or service groups and the sets of SRs, i.e. high priority mobile transceivers or services may select one of the $P_1$ SRs in the first set, and a default mobile transceiver or service may select one of the $P_2$ SRs in the second set (request index differentiation as defined by the information related to the request index differentiation). $P_1$ and $P_2$ may be parameters that may allow prioritizing one group in the sense that the collision probability is reduced. As an implementation example, $P_1 = P$, $P_2 = P/2$ may mean that high priority mobile transceivers or services may select all available SRs, whereas a default mobile transceiver or service may only utilize SRs in a respective sub-set, i.e. the remaining 50% of SRs may be used by high priority mobile transceiver or services exclusively.

Also it may be feasible that the base station transceiver 100 may send grants for the prioritized SRs more frequently, e.g. in subframes 1, 3, 5 of the frame only the high priority mobile transceivers or services may select all available SRs and only in subframe 7 the low priority mobile transceivers or services may select all available SRs. Then no collision between high priority mobile transceivers or services and low priority mobile transceivers or services might occur. The configuration (any combination of subframes) may be pre-defined or may be signaled via system information broadcast (or user-specific signaling).

A similar prioritization scheme may be implemented by separating the sub-sets of URs into two groups (subset differentiation as defined by the information related to the subset differentiation). $K_1$ sub-sets of URs may be reserved for high-priority mobile transceivers or services, and $K_2$ sub-sets of URs may be reserved for default mobile transceivers or services, where $K_1 + K_2 >= K$.

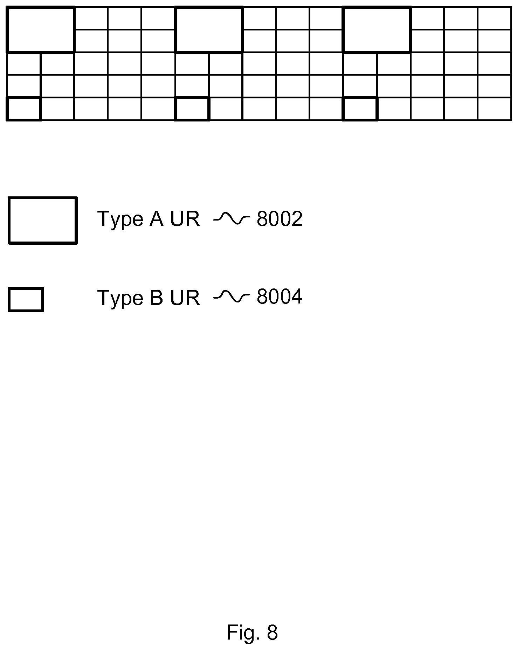

A further example of how the tuning parameter K might be exploited for service differentiation may be the support of several pre-defined configurations of URs. The example in Fig. 8 shows two different sizes of URs (Type A 8002 and Type B 8004). A mobile transceiver, e.g. the at least one mobile transceiver 200, may select a SR associated with the appropriate UR, depending on payload size and amount of required redundancy, and/or depending on a required Quality of Service.

In at least some embodiments, at least one element of the group of the information related to the association between the plurality of request indices and the plurality of scheduling requests 110, the information related to the association between the granted resources and the plurality of uplink resources 112, the information related to the control resources 114, the information related to the one or more sets of uplink resources 116, the information related to the time window 118, and the information related to the resource differentiation 119 may be predefined by the mobile communication system 300, may be transmitted by the control module 14 via the transceiver module 12 as full information, and/or may be transmitted by the control module 14 via the transceiver module 12 as index information, wherein a control module 24 as introduced subsequently may obtain concrete values from a database, an index and/or a look-up table based on the index information.

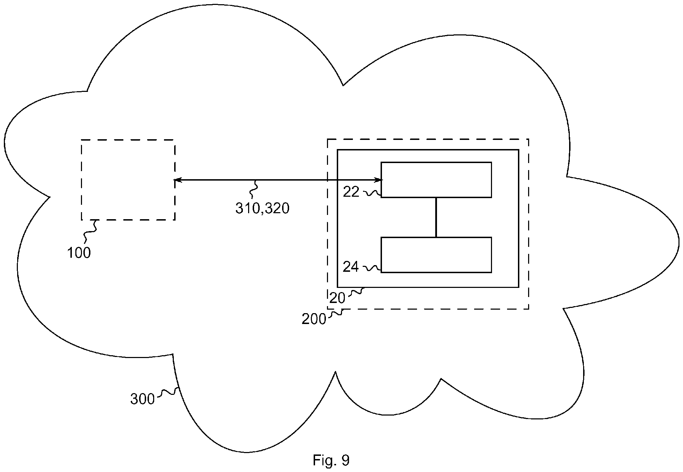

Fig. 9 illustrates a block diagram of an embodiment of an apparatus 20 suitable for a mobile transceiver 200 in a mobile communication system 300 further comprising a base station transceiver 100. The apparatus comprises a transceiver module 22 to communicate with the base station transceiver 100 using at least an uplink channel 310 and a downlink broadcast channel 320. The uplink channel 310 comprises a plurality of uplink resources. The apparatus further comprises a control module 24 configured to control the transceiver module 22. The control module 24 is coupled to the transceiver module 22. The control module 24 is configured to determine information related to a scheduling request 210, to transmit the information related to the scheduling request 210 to the base station transceiver 100, wherein the control module 24 is configured to transmit the information related to the scheduling request using an uplink resource of the plurality of uplink resources or using further uplink resources on another uplink channel, and to determine information related to a request index based on the information related to the scheduling request 210. In at least some embodiments, the control module 24 may determine the information related to the scheduling request 210 randomly based on a plurality of request indices or based on a fixed mapping of a request index to the mobile transceiver, e.g. using non-contention based scheduling requests, or based on a service differentiation scheme. In at least some embodiments, the uplink channel 310 comprising the plurality of uplink resources may be used for both the information related to the scheduling request 210 and for information related to a network payload 230 as introduced subsequently. Additionally or alternatively, the uplink channel 310 may correspond to a first uplink channel and the plurality of uplink resources may correspond to a first plurality of uplink resources in some further embodiments. In such an embodiment, there may be a second uplink channel comprising a second plurality of uplink resources, being different from or even non-overlapping with the first plurality of uplink resources. The first uplink channel may then be used for transmitting the information related to the network payload 230, and the second uplink channel may then be used for transmitting the information related to the scheduling request 210.

The control module 24 is further configured to receive information related to granted resources 120 from the base station transceiver 100 via the downlink broadcast channel 320 in response to the information related to the scheduling request 210. The information related to the granted resources 120 comprises the information related to the request index. The control module 24 is further configured to determine an uplink resource based on the information related to the granted resources 120 and the information related to the scheduling request 210. The request index is associated with an uplink resource.

In at least some embodiments, the control module 24 may be configured to obtain broadcast information related to an association between a plurality of request indices and a plurality of scheduling requests 110 and information related to an association between granted resources and the plurality of uplink resources 112 from the base station transceiver 100. The control module 24 may be configured to obtain broadcast information related to control resources 114 from the base station transceiver 100. The control module 24 may be further configured to determine the information related to the scheduling request 210 based on the information related to the control resources 114 and to control the reception of the information related to the granted resources 120 based on the information related to the control resources 114.

In various embodiments, the information related to the granted resources 120 may comprise information related to a list of request indices of a plurality of request indices. The order of request indices in the list of request indices may indicate an assignment of uplink resources of the plurality of uplink resources to request indices of the group of request indices. The control module 24 may be configured to search the list of the request indices based on the information related to the request index and to determine the uplink resource based on a position of the request index in the list of request indices. In at least some embodiments, the list of request indices may comprise request indices sorted by an increasing or decreasing index. The control module 24 may be configured to stop the search once the request index has been passed. Alternatively or additionally, the control module 24 may obtain the information related to the granted resources 120 using a plurality of downlink resources, wherein the list of request indices may be distributed across the plurality of downlink resources. The control module 24 may derive the uplink resource associated with the request index from the downlink resource used for the transmission of the request index.

In various embodiments, the control module 24 may be configured to determine the uplink resource based on the information related to the scheduling request 210, the information related to the granted resources 120, the information related to the association between the plurality of request indices and the plurality of scheduling requests 110 and the information related to the association between the granted resources and the plurality of uplink resources 112. The control module 24 may be further configured to control a transmission of information related to a network payload 230 via the transceiver module 22 based on the information related to the uplink resource. In various embodiments, the information related to granted resources 120 may comprise information related to an uplink time adjustment, information related to a modulation and/or information related to coding scheme. The control module 24 may be configured to control the transmission of the information related to the network payload based on the information related to the uplink time adjustment, the information related to the modulation and/or the information related to the coding scheme. In various embodiments, the control module 24 may determine the information related to the request index based on the information related to the scheduling request 210 and the information related to the association between the plurality of request indices and the plurality of scheduling requests 110, e.g. the control module 24 may determine the request index based on the association between the request index and the scheduling request. The control module 24 may further search for the request index in the information related to the granted resources 120, and may determine the uplink resource based on the position of the request index in the list of the request indices and the information related to the association between the granted resources and the plurality of uplink resources 112.

In at least some embodiments, the plurality of uplink resources may comprise one or more subsets of uplink resources. The control module 24 may be further configured to obtain information related to the one or more subsets of uplink resources 116 via the transceiver module 22 from the base station transceiver 100. The control module 24 may be configured to determine the uplink resource based on the information related to the one or more subsets of uplink resources 116. In at least some embodiments, the control module 24 may restrict the search of the request index in the information related to the granted resources 120 based on the information related to the one or more subsets, e.g. the control module 24 only searches grants in the information related to the granted resources 120 that match the subset associated with the information related to the scheduling request 210 and or the request index.

In at least some embodiments, the information related to the granted resources 120 may further comprise information related to a time offset associated with the information related to the request index. The control module 24 may be further configured to obtain broadcast information related to a time window 118 via the transceiver module 22 from the base station transceiver 100. The control module 24 may be configured to determine a transmission time offset based on the information related to the time offset and the information related to the time window 118. The control module 24 may be configured to transmit the information related to the network payload 230 based on the transmission time offset. The information related to the transmission time offset may comprise information related to a time offset relative to a predicted transmission time / subframe, and may be added to the predicted transmission time / subframe.

In various embodiments, the control module 24 may be further configured to obtain information related to a resource grant 122 via the transceiver module 22 from the base station transceiver 100. The control module 24 may be further configured to determine the uplink resource based on the information related to the resource grant 122. In at least some embodiments, the information related to the resource grant may comprise information related to an uplink resource to be used for an uplink transmission. The information related to the resource grant may comprise at least one element of the group of a physical resource, a PRB, a modulation, an index of an uplink resource, or a pointer to a sub-component of a resource. The control module 24 may use the information related to the resource grant to determine the uplink resource.

In at least some embodiments, the control module 24 may be further configured to determine or transmit multiple scheduling requests as information related to the scheduling request in the same time frame, based on different request indices. The control module 24 may further determine a plurality of uplink grants, based on the different request indices.

In at least some embodiments, the control module 24 may be further configured to obtain information related to resource differentiation 119 via the transceiver module 22 from the base station transceiver 100. The control module 24 may be configured to determine the information related to the scheduling request 210 based on the information related to the resource differentiation 119. The information related to the resource differentiation 119 may comprise information related to request index differentiation and/or information related to subset differentiation. In at least some embodiments, the control module 24 may determine the information related to the scheduling request 210 based on the information related to the resource differentiation by determining the information related to the scheduling request 210 based on a priority and/or service class of the mobile transceiver 100 and/or the service of the information related to the network payload to be sent.

More details and aspects of the apparatus 20 (mobile transceiver 200, base station transceiver 100, mobile communication system 300, transceiver module 22, control module 24, uplink channel 310, downlink broadcast channel 320, plurality of uplink resources, the information related to the scheduling request 210, the information related to the request index, the information related to the granted resources 120, the information related to the association between the plurality of request indices and the plurality of scheduling requests 110, the information related to the association between the granted resources and the plurality of uplink resources 112, the information related to the control resources 114, the request indices, the list of request indices, the one or more subsets of uplink resources, the information related to the one or more subsets of uplink resources 116, information related to the time offset, information related to the time window 118, the information related to the resource grant 122, the information related to the resource differentiation 119, the information related to the request index differentiation, the information related to the subset differentiation) are mentioned in connection with the proposed concept or one or more examples described above (e.g. Fig. 1 to 8). The apparatus 20 may comprise one or more additional optional features corresponding to one or more aspects of the proposed concept or one or more examples described above or below.

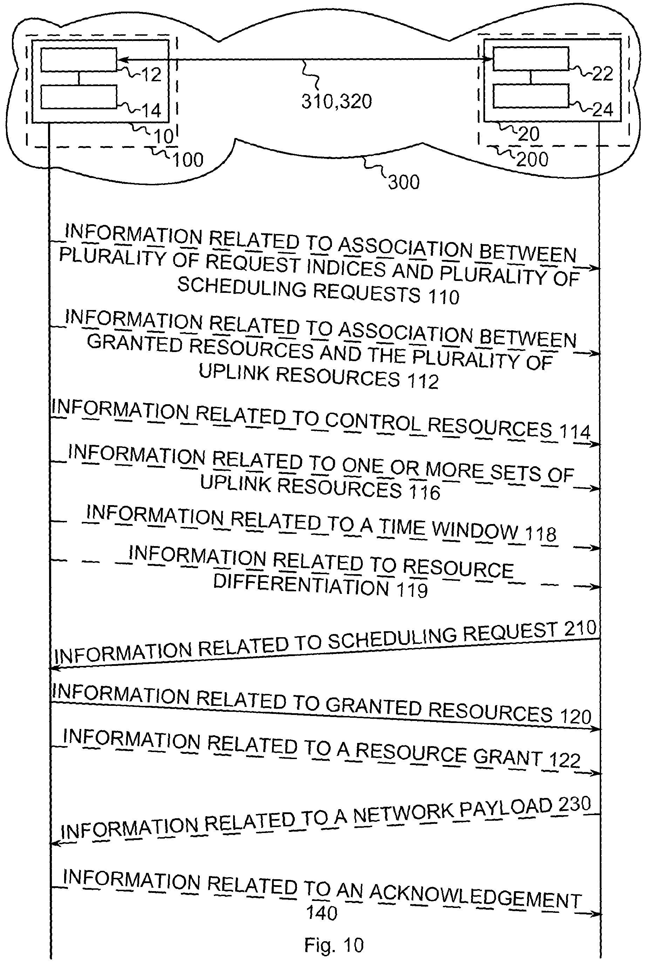

Fig. 10 illustrates a transactions diagram of an embodiment of a mobile communication system 300 comprising the base station transceiver 100 and at least one mobile transceiver 200. The base station transceiver 100 comprises the apparatus 10, which comprises the transceiver module 12 and the control module 14, which is coupled to the transceiver module 12. The at least one mobile transceiver 200 comprises the apparatus 20, which comprises the transceiver module 22 and the control module 24, which is coupled to the transceiver module 22. The at least one mobile transceiver 200 transmits the information related to the scheduling request 210 to the base station transceiver 100. The base station transceiver 100 transmits the information related to the granted resources 120 to the at least one mobile transceiver 200, in response to the information related to the scheduling request 210. Optionally, as indicated by the dashed lines, the base station transceiver 100 may broadcast the information related to the association between the plurality of request indices and the plurality of scheduling requests 110, the information related to the association between the granted resources and the plurality of uplink resources 112, the information related to the control resources 114, the information related to the one or more sets of uplink resources 116, the information related to the time window 118, and/or the information related to the resource differentiation 119. The base station transceiver 100 may further optionally transmit the information related to the resource grant 122 to the at least one mobile transceiver 200. Also, optionally, the mobile transceiver 200 may transmit the information related to the network payload 230 to the base station transceiver 100, which may transmit the information related to the acknowledgement 140 in response.

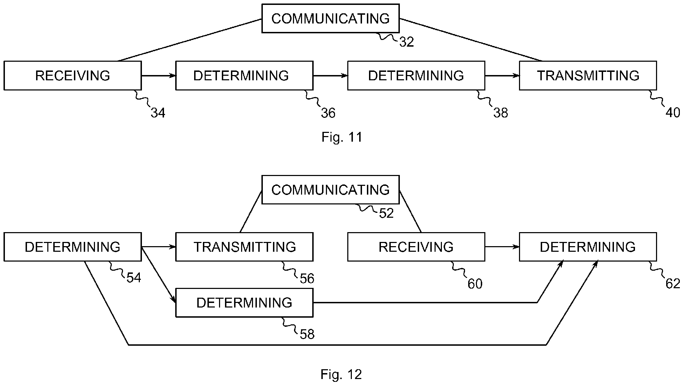

Fig. 11 illustrates a flow chart of an embodiment of a method suitable for a base station transceiver 100 in a mobile communication system 300 further comprising at least one mobile transceiver 200. The method comprises communicating 32 with the at least one mobile transceiver 200 using at least an uplink channel 310 and a downlink broadcast channel 320. The uplink channel 310 comprises a plurality of uplink resources. The method further comprises receiving 34 information related to a scheduling request 210 from the mobile transceiver 200, determining 36 information related to a request index based on the information related to the scheduling request 210, determining 38 information related to granted resources 120 from the plurality of uplink resources comprising the information related to the request index and transmitting 40 the information related to the granted resources 120 to the at least one mobile transceiver 200 via the downlink broadcast channel 320 in response to the information related to the scheduling request 210. The request index is associated with an uplink resource of the plurality of uplink resources.

Fig. 12 illustrates a flow chart of an embodiment of a method suitable for a mobile transceiver 200 in a mobile communication system 300 further comprising a base station transceiver 100. The method comprises communicating 52 with the base station transceiver (100) using at least an uplink channel 310, and a downlink broadcast channel 320. The uplink channel 310 comprises a plurality of uplink resources. The method further comprises determining 54 information related to a scheduling request 210, transmitting 56 the information related to the scheduling request 210 to the base station transceiver 100, determining 58 information related to a request index based on the information related to the scheduling request 210 and receiving 60 information related to granted resources 120 from the base station transceiver 100 via the downlink broadcast channel 320 in response to the information related to the scheduling request 210. The information related to the granted resources 120 comprises the information related to the request index. The method further comprises determining 62 an uplink resource based on the information related to the granted resources 120 and the information related to the scheduling request 210. The request index is associated with an uplink resource of the plurality of uplink resources.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Embodiments may enable scheduling of small payload traffic with a reduced signaling overhead as compared to LTE, trading of uplink throughput performance versus a downlink signaling overhead by means of parameter tuning and/or multiplexing of contention-based small payload traffic and broadband traffic on uplink without a reservation of radio resources for the small payload traffic.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

**Claims**

1.  An apparatus (10) suitable for a base station transceiver (100) in a mobile communication system (300) further comprising at least one mobile transceiver (200), the apparatus (10) comprising a transceiver module (12) to communicate with the at least one mobile transceiver (200) using at least an uplink channel (310) and a downlink broadcast channel (320), wherein the uplink channel (310) comprises a plurality of uplink resources, and a control module (14) configured to:

    control the transceiver module (12),
    receive information related to a scheduling request (210) from the mobile transceiver (200),
    determine information related to a request index based on the information related to the scheduling request (210),
    determine information related to granted resources (120) from the plurality of uplink resources comprising the information related to the request index,
    transmit the information related to the granted resources (120) to the at least one mobile transceiver (200) via the downlink broadcast channel (320) in response to the information related to the scheduling request (210),
    wherein the request index is associated with an uplink resource of the plurality of uplink resources.

2.  The apparatus (10) of claim 1, wherein the control module (14) is configured to broadcast information related to an association between a plurality of request indices and a plurality of scheduling requests (110), information related to an association between granted resources and the plurality of uplink resources (112), and/or information related to control resources (114) to the at least one mobile transceiver (200).

3.  The apparatus (10) of claim 1, wherein the transceiver module is further configured to receive information related to a network payload (230) from the one or more mobile transceivers (200) via the uplink channel (310) using one or more uplink resources from the plurality of uplink resources and to transmit information related to an acknowledgement (140) to the one or more mobile transceivers (200) via the downlink broadcast channel (320), and wherein the control module is further configured to determine the information related to the acknowledgement (140) based on the information related to the network payload (230).

4.  The apparatus (10) of claim 1, wherein the plurality of uplink resources comprises one or more subsets of uplink resources, and wherein the control module (14) is configured to determine a subset of the one or more subsets of uplink resources based on the information related to the scheduling request (210), and wherein the control module (14) is configured to determine the information related to the granted resources (120) based on the subset, and wherein the control module (14) is further configured to broadcast information related to the one or more subsets of uplink resources (116) via the transceiver module (12) to the at least one mobile transceiver (200), and/or wherein the information related to the granted resources (120) further comprises information related to a time offset associated with the information related to the request index, and wherein the control module (14) is further configured to determine the information related to the time offset based on the information related to the scheduling request (210) and information related to a time window, and wherein the control module (14) is further configured to broadcast the information related to the time window (118) via the transceiver module (12) to the at least one mobile transceiver (200), and/or wherein the control module (14) is further configured to determine information related to a resource grant (122) based on the information related to the scheduling request (210), and wherein the control module (14) is further configured to transmit the information related to resource grant (122) via the transceiver module (12) to the at least one mobile transceiver (200).

5. The apparatus (10) of claim 4, wherein the control module (14) is further configured to determine the information related to the granted resources (120) based on information related to resource differentiation (119), wherein the control module (14) is further configured to transmit the information related to the resource differentiation (119) via the transceiver module (12) to the at least one mobile transceiver (200), wherein the information related to the resource differentiation (119) comprises information related to request index differentiation and/or information related to subset differentiation.

6. The apparatus (10) of claim 1, wherein the information related to the granted resources comprises information related to a list of request indices of a plurality of request indices, wherein the order of request indices in the list of request indices indicates an assignment of uplink resources of the plurality of uplink resources to request indices of the group of request indices.

7. An apparatus (20) suitable for a mobile transceiver (200) in a mobile communication system (300) further comprising a base station transceiver (100), the apparatus comprising
a transceiver module (22) to communicate with the base station transceiver (100) using at least an uplink channel (310) and a downlink broadcast channel (320), wherein the uplink channel (310) comprises a plurality of uplink resources,
and a control module (24) configured to:

control the transceiver module (22),
determine information related to a scheduling request (210),
transmit the information related to the scheduling request (210) to the base station transceiver (100),
determine information related to a request index based on the information related to the scheduling request (210),
receive information related to granted resources (120) from the base station transceiver (100) via the downlink broadcast channel (320) in response to the information related to the scheduling request (210), the information related to the granted resources (120) comprising the information related to the request index,
determine an uplink resource based on the information related to the granted resources (120) and the information related to the scheduling request (210), wherein the request index is associated with an uplink resource.

8. The apparatus (10) of claim 7, wherein the control module (24) is configured to obtain broadcast information related to an association between a plurality of request indices and a plurality of scheduling requests (110) and information related to an association between granted resources and the plurality of uplink resources (112) from the base station transceiver (100), and/or wherein the control module (24) is configured to obtain broadcast information related to control resources (114) from the base station transceiver (100) and wherein the control module (24) is further configured to determine the information related to the scheduling request (210) based on the information related to the control resources (114) and to control the reception of the information related to the granted resources (120) based on the information related to the control resources (114).

9. The apparatus (10) of claim 8 wherein the control module (24) is configured to determine the uplink resource based on the information related to the scheduling request (210), the information related to the granted resources (120), the information related to the association between the plurality of request indices and the plurality of scheduling requests (110) and the information related to the association between the granted resources and the plurality of uplink resources (112), and wherein the control module (24) is further configured to control a transmission of information related to a network payload (230) via the transceiver module (22) based on the information related to the uplink resource.

10. The apparatus (10) of claim 7, wherein the plurality of uplink resources comprises one or more subsets of uplink resources, wherein the control module (24) is further configured to obtain information related to the one or more subsets of uplink resources (116) via the transceiver module (22) from the base station transceiver (100), and wherein the control module (24) is configured to determine the uplink resource based on the information related to the one or more subsets of uplink resources (116),
and/or wherein the control module (24) is further configured to obtain information related to a resource grant (122) via the transceiver module (22) from the base station transceiver (100), and wherein the control module (24) is further configured to determine the uplink resource based on the information related to the resource grant (122),
and/or wherein the information related to the granted resources (120) comprises information related to a list of request indices of a plurality of request indices, wherein the order of request indices in the list of request indices indicates an assignment of uplink resources of the plurality of uplink resources to request indices of the group of request indices, and wherein the control module (24) is configured to search the list of the request indices based on the information related to the request index and to determine the uplink resource based on a position of the request index in the list of request indices.

11. The apparatus (10) of claim 9, wherein the information related to the granted resources (120) further comprises information related to a time offset associated with the information related to the request index, and wherein the control module (24) is further configured to obtain broadcast information related to a time window (118) via the transceiver module (22) from the base station transceiver (100), and wherein the control module (24) is configured to determine a transmission time offset based on the information related to the time offset and the information related to the time window (118), and wherein the control module (24) is configured to transmit the information related to the network payload (230) based on the transmission time offset.

12. The apparatus (10) of claim 7, wherein the control module (24) is further configured to obtain information related to resource differentiation (119) via the transceiver module (22) from the base station transceiver (200), and wherein the control module (24) is configured to determine the information related to the scheduling request (210) based on the information related to the resource differentiation (119), wherein the information related to the resource differentiation (119) comprises information related to request index differentiation and/or information related to subset differentiation.

13. A method performed by an apparatus suitable for a base station transceiver (100) in a mobile communication system (300) further comprising at least one mobile transceiver (200), the method comprising
communicating (32) with the at least one mobile transceiver (200) using at least an uplink channel (310) and a downlink broadcast channel (320), wherein the uplink channel (310) comprises a plurality of uplink resources,
receiving (34) information related to a scheduling request (210) from the mobile transceiver (200),
determining (36) information related to a request index based on the information related to the scheduling request (210),
determining (38) information related to granted resources (120) from the plurality of uplink resources comprising the information related to the request index,
transmitting (40) the information related to the granted resources (120) to the at least one mobile transceiver (200) via the downlink broadcast channel (320) in response to the information related to the scheduling request (210), wherein the request index is associated with an uplink resource of the plurality of uplink resources.

14. A method performed by an apparatus suitable for a mobile transceiver (200) in a mobile communication system (300) further comprising a base station transceiver (100), the method comprising communicating (52) with the base station transceiver (100) using at least an uplink channel (310), and a downlink broadcast channel (320), wherein the uplink channel (310) comprises a plurality of uplink resources,
determining (54) information related to a scheduling request (210),
transmitting (56) the information related to the scheduling request (210) to the base station transceiver (100),
determining (58) information related to a request index based on the information related to the scheduling request (210),
receiving (60) information related to granted resources (120) from the base station transceiver (100) via the downlink broadcast channel (320) in response to the information related to the scheduling request (210), the information related to the granted resources (120) comprising the information related to the request index,
determining (62) an uplink resource based on the information related to the granted resources (120) and the information related to the scheduling request (210), wherein the request index is associated with an uplink resource of the plurality of uplink resources.

15. A computer program having a program code for performing at least one of the methods of claims 13 and 14, when the computer program is executed on a computer, a processor, or a programmable hardware component.

**Patentansprüche**

1. Vorrichtung (10), die für einen Sender/Empfänger (100) einer Basisstation in einem Mobilkommunikationssystem (300) geeignet ist, ferner mit wenigstens einem mobilen Sender-Empfänger (200), wobei die Vorrichtung (10) aufweist:

ein Sender/Empfänger-Modul (12), um mit dem wenigstens einen Sender-Empfänger (200) unter Verwendung wenigstens eines Aufwärtsstrecken(Uplink)-Kanals (310) und eines Abwärtsstrecken(Downlink)-Funkkanals (320) zu kommunizieren, wobei der Uplink-Kanal (310) mehrere Uplink-Ressourcen aufweist,

und ein Steuermodul (14), das dafür ausgelegt ist, den Sender/Empfänger-Modul (12) zu steuern,

von dem Sender-Empfänger (200) Informationen zu empfangen, die eine Planungsanforderung (210) betreffen,

auf der Grundlage der Informationen, die die Planungsanforderung (210) betreffen, Informationen zu bestimmen, die einen Anforderungsindex betreffen, Informationen, die genehmigte Ressource (120) aus den mehreren Uplink-Ressourcen betreffen, die die Informationen beinhalten, die den Anforderungsindex betreffen, zu bestimmen,

in Antwort auf die Informationen, die die Planungsanforderung (210) betreffen, die Informationen, die die genehmigten Ressourcen (120) betreffen, über den Downlink-Funkkanal (320) zu dem wenigstens einen Sender-Empfänger (200) zu übertragen,

wobei der Anforderungsindex zu einer Uplink-Ressource der mehreren Uplink-Ressourcen zugeordnet ist.

2. Vorrichtung (10) nach Anspruch 1, wobei das Steuermodul (14) dafür ausgelegt ist, Informationen, die eine Zuordnung zwischen mehreren Anforderungsindizes und mehreren Planungsanforderungen (110) betreffen, Informationen, die eine Zuordnung zwischen genehmigten Ressourcen und den mehreren Uplink-Ressourcen (112) betreffen, und/oder Informationen, die Steuerungsressourcen (114) betreffen, zu dem wenigstens einen Sender-Empfänger (200) auszustrahlen.

3. Vorrichtung (10) nach Anspruch 1, wobei das Sender/Empfänger-Modul ferner dafür ausgelegt ist, Informationen, die eine Netzwerknutzlast (230) betreffen, von dem einen oder den mehreren mobilen Sender-Empfängern (200) über den Uplink-Kanal (310) unter Verwendung einer oder mehrerer Uplink-Ressourcen aus den mehrerer Uplink-Ressourcen zu empfangen, und Informationen, die eine Empfangsbestätigung (140) betreffen, über den Downlink-Funkkanal (320) zu dem einen oder zu den mehreren mobilen Sender-Empfängern (200) zu übertragen, und wobei das Steuermodul ferner dafür ausgelegt ist, die Informationen, die die Empfangsbestätigung (140) betreffen, auf der Grundlage der Informationen, die die Netzwerknutzlast (230) betreffen, zu bestimmen.

4. Vorrichtung (10) nach Anspruch 1, wobei die mehreren Uplink-Ressourcen einen oder mehrere Teilsätze von Uplink-Ressourcen beinhalten, und wobei das Steuermodul (14) dafür ausgelegt ist, einen Teilsatz des einen oder der mehreren Teilsätze von Uplink-Ressourcen auf der Grundlage der Informationen zu bestimmen, die die Planungsanforderung (210) betreffen, und wobei das Steuermodul (14) dafür ausgelegt ist, die Informationen, die die genehmigten Ressourcen (120) betreffen, auf der Grundlage des Teilsatzes zu bestimmen, und wobei das Steuermodul (14) ferner dafür ausgelegt ist, Informationen, die den einen oder die mehreren Teilsätze von Uplink-Ressourcen (116) betreffen, über das Sender/Empfänger-Modul (12) zu dem wenigstens einen Sender-Empfänger (200) auszustrahlen, und/oder wobei die Informationen, die die genehmigten Ressourcen (120) betreffen, ferner Informationen beinhalten, die einen Zeitversatz betreffen, der den Informationen, die den Anforderungsindex betreffen, zugeordnet ist, und wobei das Steuermodul (14) ferner dafür ausgelegt ist, die Informationen, die den Zeitversatz betreffen, auf der Grundlage der Informationen, die die Planungsanforderung (210) betreffen, und der Informationen, die ein Zeitfenster betreffen, zu bestimmen, und wobei das Steuermodul (14) ferner dafür ausgelegt ist, die Informationen, die das Zeitfenster (118) betreffen, über das Sender/Empfänger-Modul (12) zu dem wenigstens einen Sender-Empfänger (200) auszustrahlen,

und/oder wobei das Steuermodul (14) ferner dafür ausgelegt ist, Informationen, die eine Ressourcengenehmigung (122) betreffen, auf der Grundlage der Informationen, die die Planungsanforderung (210) betreffen, zu bestimmen, und wobei das Steuermodul (14) ferner dafür ausgelegt ist, die Informationen, die eine Ressourcengenehmigung (122) betreffen, über das Sender/Empfänger-Modul (12) an den wenigstens einen Sender-Empfänger (200) zu übertragen.

5. Vorrichtung (10) nach Anspruch 4, wobei das Steuermodul (14) ferner dafür ausgelegt ist, die Informationen, die die genehmigten Ressourcen (120) betreffen, auf der Grundlage von Informationen, die eine Ressourcendifferenzierung (119) betreffen, zu bestimmen, wobei das Steuermodul (14) ferner dafür ausgelegt ist, die Informationen, die die Ressourcendifferenzierung (119) betreffen, über das Sender/Empfänger-Modul (12) zu dem wenigstens einen Sender-Empfänger (200) zu übertragen, wobei die Informationen, die die Ressourcendifferenzierung (119) betreffen, Informationen, die eine Anforderungsindexdifferenzierung betreffen, und/oder Informationen, die einen Teilsatzdifferenzierung betreffen, beinhalten.

6. Vorrichtung (10) nach Anspruch 1, wobei die Informationen, die die genehmigten Ressourcen betreffen, Informationen beinhalten, die eine Liste von Anforderungsindizes mehrerer Anforderungsindizes betreffen, wobei die Rangfolge von Anforderungsindizes in der Liste von Anforderungsindizes eine Zuweisung von Uplink-Ressourcen der mehreren Uplink-Ressourcen zu Anforderungsindizes der Gruppe von Anforderungsindizes anzeigt.

7. Vorrichtung (20), die für einen mobilen Sender-Empfänger (200) in einem Mobilkommunikationssystem (300) geeignet ist, ferner mit einem Sender/Empfänger (100) einer Basisstation, wobei die Vorrichtung aufweist:

   ein Sender/Empfänger-Modul (22), um mit dem Sender/Empfänger einer Basisstation (100) unter Verwendung wenigstens eines Uplink-Kanals (310) und eines Downlink-Funkkanals (320) zu kommunizieren, wobei der Uplink-Kanal (310) mehrere Uplink-Ressourcen aufweist,
   und ein Steuermodul (24), das dafür ausgelegt ist, das Sender/Empfänger-Modul (22) zu steuern,
   Informationen, die eine Planungsanforderung (210) betreffen, zu bestimmen,
   die Informationen, die die Planungsanforderung (210) betreffen, zu dem Sender/Empfänger (100) einer Basisstation zu übertragen,
   Informationen, die einen Anforderungsindex betreffen, auf der Grundlage der Informationen, die die Planungsanforderung (210) betreffen, zu bestimmen, Informationen, die genehmigte Ressourcen (120) betreffen, von dem Sender/Empfänger (100) einer Basisstation über den Downlink-Funkkanal (320) in Antwort auf die Informationen, die die Planungsanforderung (210) betreffen, zu empfangen, wobei die Informationen, die die genehmigten Ressourcen (120) betreffen, die die Informationen, die den Anforderungsindex betreffen, beinhalten, eine Uplink-Ressource auf der Grundlage der Informationen, die die genehmigten Ressourcen (120) betreffen, und der Informationen, die die Planungsanforderung (210) betreffen, zu bestimmen, wobei der Anforderungsindex einer Uplink-Ressource zugeordnet ist.

8. Vorrichtung (10) nach Anspruch 7, wobei das Steuermodul (24) dafür ausgelegt ist, ausgestrahlte Informationen, die eine Zuordnung zwischen mehreren Anforderungsindizes und mehreren Planungsanforderungen (110) betreffen, und Informationen, die eine Zuordnung zwischen genehmigten Ressourcen und den mehreren Uplink-Ressourcen (112) betreffen, von dem Sender/Empfänger (100) der Basisstation zu gewinnen, und/oder wobei das Steuermodul (24) dafür ausgelegt ist, ausgestrahlte Informationen, die Steuerungsressourcen (114) betreffen, von dem Sender/Empfänger (100) der Basisstation zu gewinnen, und wobei das Steuermodul (24) ferner dafür ausgelegt ist, die Informationen, die die Planungsanforderung (210) betreffen, auf der Grundlage der Informationen zu bestimmen, die die Steuerungsressourcen (114) betreffen, und den Empfang der Informationen, die die genehmigten Ressourcen (120) betreffen, auf der Grundlage der Informationen zu steuern, die die Steuerungsressourcen (114) betreffen.

9. Vorrichtung (10) nach Anspruch 8 wobei das Steuermodul (24) dafür ausgelegt ist, die Uplink-Ressource auf der Grundlage der Informationen, die die Planungsanforderung (210) betreffen, die Informationen, die die genehmigten Ressourcen (120) betreffen, die Informationen, die die Zuordnung zwischen den mehreren Anforderungsindizes und den mehreren Planungsanforderungen (110) betreffen, und die Informationen, die die Zuordnung zwischen den genehmigten Ressourcen und den mehreren Uplink-Ressourcen (112) betreffen, zu bestimmen, und wobei das Steuermodul (24) ferner dafür ausgelegt ist, eine Übertragung von Informationen, die eine Netzwerknutzlast (230) betreffen, über das Sender/Empfänger-Modul (22) auf der Grundlage der Informationen, die die Uplink-Ressource betreffen, zu steuern.

10. Vorrichtung (10) nach Anspruch 7, wobei die mehreren Uplink-Ressourcen eine oder mehrere Teilsätze von Uplink-Ressourcen beinhalten, wobei das Steuermodul (24) ferner dafür ausgelegt ist, Informationen, die den einen oder die mehreren Teilsätze von Uplink-Ressourcen (116) betreffen, über das Sender/Empfänger-Modul (22) von dem Sender/Empfänger (100) einer Basisstation zu gewinnen, und wobei das Steuermodul (24) dafür ausgelegt ist, die Uplink-Ressource auf der Grundlage der Informationen, die den einen oder die mehreren Teilsätze von Uplink-Ressourcen (116) betreffen, zu bestimmen,
   und/oder wobei das Steuermodul (24) ferner dafür ausgelegt ist, Informationen, die eine Ressourcengenehmigung (122) betreffen, über das Sender/Empfänger-Modul (22) von dem Sender/Empfänger (100) einer Basisstation zu gewinnen, und wobei das Steuermodul (24) ferner dafür ausgelegt ist, die Uplink-Ressource auf der Grundlage der Informationen, die die Ressourcengenehmigung (122) betreffen, zu bestimmen,
   und/oder wobei die Informationen, die die genehmigten Ressourcen (120) betreffen, Informationen beinhalten, die eine Liste von Anforderungsindizes mehrerer Anforderungsindizes betreffen, wobei die Rangfolge von Anforderungsindizes in der Liste von Anforderungsindizes eine Zuweisung von Uplink-Ressourcen der mehreren Uplink-Ressourcen zu Anforderungsindizes der Gruppe von Anforderungsindizes anzeigt, und wobei das Steuermodul (24) dafür ausgelegt ist, die Liste der Anforderungsindizes auf der Grundlage der Informationen, die den Anforderungsindex betreffen, zu durchsuchen und die Uplink-Ressource auf der Grundlage einer Position des Anforderungsindex in der Liste von Anforderungsindizes zu bestimmen.

**11.** Vorrichtung (10) nach Anspruch 9, wobei die Informationen, die die genehmigten Ressourcen (120) betreffen, ferner Informationen beinhalten, die einen Zeitversatz betreffen, der den Informationen zugeordnet ist, die den Anforderungsindex betreffen, und wobei das Steuermodul (24) ferner dafür ausgelegt ist, ausgestrahlte Informationen, die ein Zeitfenster (118) betreffen, über das Sender/Empfänger-Modul (22) von dem Sender/Empfänger (100) einer Basisstation zu gewinnen, und wobei das Steuermodul (24) dafür ausgelegt ist, einen Übertragungszeitversatz auf der Grundlage der Informationen, die den Zeitversatz betreffen, und der Informationen, die die Zeitfenster (118) betreffen, zu bestimmen, und wobei das Steuermodul (24) dafür ausgelegt ist, die Informationen, die die Netzwerknutzlast (230) betreffen, auf der Grundlage des Übertragungszeitversatzes zu übertragen.

**12.** Vorrichtung (10) nach Anspruch 7, wobei das Steuermodul (24) ferner dafür ausgelegt ist, Informationen, die die Ressourcendifferenzierung (119) betreffen, über das Sender/Empfänger-Modul (22) von dem Sender/Empfänger einer Basisstation (200) zu gewinnen, und wobei das Steuermodul (24) dafür ausgelegt ist, die Informationen, die die Planungsanforderung (210) betreffen, auf der Grundlage der Informationen, die die Ressourcendifferenzierung (119) betreffen, zu bestimmen, wobei die Informationen, die die Ressourcendifferenzierung (119) betreffen, Informationen, die eine Anforderungsindexdifferenzierung betreffen, und/oder Informationen, die eine Teilsatzdifferenzierung betreffen, beinhalten.

**13.** Verfahren, das durch eine Vorrichtung durchgeführt wird, die für einen Sender/Empfänger (100) einer Basisstation in einem Mobilkommunikationssystem (300) geeignet ist, ferner mit wenigstens einem mobilen Sender-Empfänger (200), wobei das Verfahren Folgendes umfasst:

Kommunizieren (32) mit dem wenigstens einen Sender-Empfänger (200) unter Verwendung wenigstens eines Uplink-Kanals (310) und eines Downlink-Funkkanals (320), wobei der Uplink-Kanal (310) mehrere Uplink-Ressourcen aufweist,
Empfangen (34) von Informationen, die eine Planungsanforderung (210) betreffen, von dem Sender-Empfänger (200),
Bestimmen (36) von Informationen, die einen Anforderungsindex betreffen, auf der Grundlage der Informationen, die die Planungsanforderung (210) betreffen,
Bestimmen (38) von Informationen, die genehmigte Ressourcen (120) aus den mehreren Uplink-Ressourcen betreffen, die die Informationen, die den Anforderungsindex betreffen, beinhalten,
Übertragen (40) der Informationen, die die genehmigten Ressourcen (120) betreffen, zu dem wenigstens einen Sender-Empfänger (200) über den Downlink-Funkkanal (320) in Antwort auf die Informationen, die die Planungsanforderung (210) betreffen,
wobei der Anforderungsindex zu einer Uplink-Ressource der mehreren Uplink-Ressourcen zugeordnet ist.

**14.** Verfahren, das durch eine Vorrichtung durchgeführt wird, die für einen mobilen Sender-Empfänger (200) in einem Mobilkommunikationssystem (300) geeignet ist, der ferner einen Sender/Empfänger (100) einer Basisstation aufweist, wobei das Verfahren Folgendes umfasst:

Kommunizieren (52) mit dem Sender/Empfänger einer Basisstation (100) unter Verwendung wenigstens eines Uplink-Kanals (310) und eines Downlink-Funkkanals (320), wobei der Uplink-Kanal (310) mehrere Uplink-Ressourcen aufweist,
Bestimmen (54) von Informationen, die eine Planungsanforderung (210) betreffen,
Übertragen (56) der Informationen, die die Planungsanforderung (210) betreffen, zu dem Sender/Empfänger (100) der Basisstation,
Bestimmen (58) von Informationen, die einen Anforderungsindex betreffen, auf der Grundlage der Informationen, die die Planungsanforderung (210) betreffen,
Empfangen (60) von Informationen, die genehmigte Ressourcen (120) betreffen, von dem Sender/Empfänger (100) der Basisstation über den Downlink-Funkkanal (320) in Antwort auf die Informationen, die die Planungsanforderung (210) betreffen, wobei die Informationen, die die genehmigten Ressourcen (120) betreffen, die Informationen beinhalten, die den Anforderungsindex betreffen,
Bestimmen (62) einer Uplink-Ressource auf der Grundlage der Informationen, die die genehmigten Ressourcen (120) betreffen, und der Informationen, die die Planungsanforderung (210) betreffen, wobei der Anforderungsindex zu einer Uplink-Ressource der mehreren Uplink-Ressourcen zugeordnet ist.

**15.** Computerprogramm, das einen Programmcode zur Durchführung mindestens eines der Verfahren nach den Ansprüchen 13 und 14 aufweist, wenn das Computerprogramm auf einem Computer, einem Prozessor oder einer programmierbaren Hardwarekomponente ausgeführt wird.

**Revendications**

1. Appareil (10) approprié pour un émetteur-récepteur de station de base (100) dans un système de communication mobile (300) comprenant en outre au moins un émetteur-récepteur mobile (200), l'appareil (10) comprenant :

   un module émetteur-récepteur (12) pour communiquer avec au moins un émetteur-récepteur mobile (200) en utilisant au moins un canal de liaison montante (310) et un canal de diffusion de liaison descendante (320), où le canal de liaison montante (310) comprend une pluralité de ressources de liaison montante,
   et un module de commande (14) configuré pour :

   commander le module émetteur-récepteur (12),
   recevoir des informations relatives à une demande de planification (210) de l'émetteur-récepteur mobile (200),
   déterminer les informations relatives à un index de demande sur la base des informations relatives à la demande de planification (210),
   déterminer les informations relatives aux ressources octroyées (120) à partir de la pluralité de ressources de liaison montante comprenant les informations relatives à l'index de demande,
   transmettre les informations relatives aux ressources octroyées (120) à l'au moins un émetteur-récepteur mobile (200) par l'intermédiaire du canal de diffusion de liaison descendante (320) en réponse aux informations relatives à la demande de planification (210),
   où l'index de demande est associé à une ressource de liaison montante de la pluralité de ressources de liaison montante.

2. Appareil (10) selon la revendication 1, dans lequel le module de commande (14) est configuré pour diffuser des informations relatives à une association entre une pluralité d'index de demande et une pluralité de demandes de planification (110), des informations relatives à une association entre des ressources octroyées et la pluralité de ressources de liaison montante (112), et/ou des informations relatives aux ressources de commande (114) vers l'au moins un émetteur-récepteur mobile (200).

3. Appareil (10) selon la revendication 1, dans lequel le module émetteur-récepteur est en outre configuré pour recevoir des informations relatives à une charge utile de réseau (230) provenant d'un ou plusieurs émetteurs-récepteurs mobiles (200) par l'intermédiaire du canal de liaison montante (310) en utilisant une ou plusieurs ressources de liaison montante parmi la pluralité de ressources de liaison montante et pour transmettre des informations relatives à un accusé de réception (140) aux un ou plusieurs émetteurs-récepteurs mobiles (200) par l'intermédiaire du canal de diffusion de liaison descendante (320), et où le module de commande est en outre configuré pour déterminer les informations relatives à l'accusé de réception (140) sur la base des informations relatives à la charge utile de réseau (230).

4. Appareil (10) selon la revendication 1, dans lequel la pluralité de ressources de liaison montante comprend un ou plusieurs sous-ensembles de ressources de liaison montante, et où le module de commande (14) est configuré pour déterminer un sous-ensemble du ou des sous-ensembles de ressources de liaison montante sur la base des informations relatives à la demande de planification (210), et où le module de commande (14) est configuré pour déterminer les informations relatives aux ressources octroyées (120) sur la base du sous-ensemble, et où le module de commande (14) est en outre configuré pour diffuser des informations relatives à un ou plusieurs sous-ensembles de ressources de liaison montante (116) par l'intermédiaire du module émetteur-récepteur (12) vers l'au moins un émetteur-récepteur mobile (200),
   et/ou dans lequel les informations relatives aux ressources octroyées (120) comprennent en outre des informations relatives à un décalage temporel associé aux informations relatives à l'index de demande, et où le module de commande (14) est en outre configuré pour déterminer les informations relatives au décalage temporel sur la base des informations relatives à la demande de planification (210) et des informations relatives à une fenêtre temporelle, et où le module de commande (14) est en outre configuré pour diffuser les informations relatives à la fenêtre temporelle (118) par l'intermédiaire du module émetteur-récepteur (12) vers l'au moins un émetteur-récepteur mobile (200), et/ou dans lequel le module de commande (14) est en outre configuré pour déterminer les informations relatives à un octroi de ressources (122) sur la base des informations relatives à la demande de planification (210), et où le module de commande (14) est en outre configuré pour transmettre les informations relatives à l'octroi de ressources (122) par l'intermédiaire du module émetteur-récepteur (12) à l'au moins un émetteur-récepteur mobile (200).

5. Appareil (10) selon la revendication 4, dans lequel le module de commande (14) est en outre configuré pour déterminer les informations relatives aux ressources octroyées (120) sur la base des informations relatives à la différenciation des ressources (119), où le module de commande (14) est en outre configuré pour transmettre les informations relatives à la différenciation des ressources (119) par l'intermédiaire du module émetteur-récepteur (12) à l'au moins un émetteur-récepteur mobile (200), où les informations relatives à la différenciation des ressources (119) comprennent des informations relatives à la différenciation d'index de demande et/ou des informations relatives à la différenciation de sous-ensembles.

6. Appareil (10) selon la revendication 1, dans lequel les informations relatives aux ressources octroyées comprennent des informations relatives à une liste d'index de demande d'une pluralité d'index de demande, où l'ordre des index de demande dans la liste des index de demande indique une affectation de ressources de liaison montante de la pluralité des ressources de liaison montante aux index de demande du groupe d'index de demande.

7. Appareil (20) approprié pour un émetteur-récepteur mobile (200) dans un système de communication mobile (300) comprenant en outre un émetteur-récepteur de station de base (100), l'appareil comprenant :

   un module émetteur-récepteur (22) pour communiquer avec l'émetteur-récepteur de station de base (100) en utilisant au moins un canal de liaison montante (310) et un canal de diffusion de liaison descendante (320), où le canal de liaison montante (310) comprend une pluralité de ressources de liaison montante,
   et un module de commande (24) configuré pour :

   commander le module émetteur-récepteur (22),
   déterminer les informations relatives à une demande de planification (210),
   transmettre les informations relatives à la demande de planification (210) à l'émetteur-récepteur de station de base (100),
   déterminer les informations relatives à un index de demande sur la base des informations relatives à la demande de planification (210),
   recevoir des informations relatives aux ressources octroyées (120) depuis l'émetteur-récepteur de station de base (100) par l'intermédiaire du canal de diffusion de liaison descendante (320) en réponse aux informations relatives à la demande de planification (210), les informations relatives aux ressources octroyées (120) comprenant les informations relatives à l'index de demande,
   déterminer une ressource de liaison montante sur la base des informations relatives aux ressources octroyées (120) et des informations relatives à la demande de planification (210), où l'index de demande est associé à une ressource de liaison montante.

8. Appareil (10) selon la revendication 7, dans lequel le module de commande (24) est configuré pour obtenir des informations de diffusion relatives à une association entre une pluralité d'index de demande et une pluralité de demandes de planification (110) et des informations relatives à une association entre des ressources octroyées et la pluralité de ressources de liaison montante (112) depuis l'émetteur-récepteur (100) de station de base, et/ou dans lequel le module de commande (24) est configuré pour obtenir des informations de diffusion relatives aux ressources de commande (114) depuis l'émetteur-récepteur de la station de base (100) et où le module de commande (24) est en outre configuré pour déterminer les informations relatives à la demande de planification (210) sur la base des informations relatives aux ressources de commande (114) et pour commander la réception des informations relatives aux ressources octroyées (120) sur la base des informations relatives aux ressources de commande (114).

9. Appareil (10) selon la revendication 8, dans lequel le module de commande (24) est configuré pour déterminer la ressource de liaison montante sur la base des informations relatives à la demande de planification (210), des informations relatives aux ressources octroyées (120), des informations relatives à l'association entre la pluralité d'index de demande et la pluralité de demandes de planification (110) et les informations relatives à l'association entre les ressources octroyées et la pluralité de ressources de liaison montante (112), et où le module de commande (24) est en outre configuré pour commander une transmission des informations relatives à une charge utile de réseau (230) par l'intermédiaire du module émetteur-récepteur (22) sur la base des informations relatives à la ressource de liaison montante.

10. Appareil (10) selon la revendication 7, dans lequel la pluralité de ressources de liaison montante comprend un ou plusieurs sous-ensembles de ressources de liaison montante, où le module de commande (24) est en outre configuré pour obtenir des informations relatives à un ou plusieurs sous-ensembles de ressources de liaison montante (116) par l'intermédiaire du module émetteur-récepteur (22) depuis l'émetteur-récepteur (100) de la station de base, et où le module de commande (24) est configuré pour déterminer la ressource de liaison montante sur la base des informations relatives aux un ou plusieurs sous-ensembles de ressources de liaison montante (116), et/ou dans lequel le module de commande (24) est en outre configuré pour obtenir des informations relatives à un octroi de ressource (122) par l'intermédiaire du module émetteur-récepteur (22) depuis l'émetteur-récepteur de la station de base (100), et où le module de commande (24) est en outre configuré pour déterminer la ressource de liaison montante sur la base des informations relatives à l'octroi de ressource (122), et/ou dans lequel les informations relatives aux ressources octroyées (120) comprennent des informations relatives à une liste d'index de demande d'une pluralité d'index de demande, où l'ordre des index de demande dans la liste des index de demande indique une affectation des ressources de liaison montante de la pluralité des ressources de liaison montante pour demander des index du groupe d'index de demande, et où le module de commande (24) est configuré pour effectuer une recherche dans la liste des index de demande sur la base des informations relatives aux index de demande et pour déterminer les ressources de liaison montante sur la base d'une position de l'index de demande dans la liste des index de demande.

**11.** Appareil (10) selon la revendication 9, dans lequel les informations relatives aux ressources octroyées (120) comprennent en outre des informations relatives à un décalage temporel associé aux informations relatives à l'index de demande, et où le module de commande (24) est en outre configuré pour obtenir des informations de diffusion relatives à une fenêtre temporelle (118) par l'intermédiaire du module émetteur-récepteur (22) depuis l'émetteur-récepteur (100) de la station de base, et où le module de commande (24) est configuré pour déterminer un décalage de temps de transmission sur la base des informations relatives au décalage de temps et des informations relatives à la fenêtre temporelle (118), et où le module de commande (24) est configuré pour transmettre les informations relatives à la charge utile du réseau (230) sur la base du décalage de temps de transmission.

**12.** Appareil (10) selon la revendication 7, dans lequel le module de commande (24) est en outre configuré pour obtenir des informations relatives à la différenciation des ressources (119) par l'intermédiaire du module émetteur-récepteur (22) depuis l'émetteur-récepteur de la station de base (200), et où le module de commande (24) est configuré pour déterminer les informations relatives à la demande de planification (210) sur la base des informations relatives à la différenciation des ressources (119), où les informations relatives à la différenciation des ressources (119) comprennent des informations relatives à la différenciation des index de demande et/ou des informations relatives à la différenciation des sous-ensembles.

**13.** Procédé exécuté par un appareil approprié pour un émetteur-récepteur de station de base (100) dans un système de communication mobile (300) comprenant en outre au moins un émetteur-récepteur mobile (200), le procédé comprenant les étapes suivantes :

communiquer (32) avec l'au moins un émetteur-récepteur mobile (200) en utilisant au moins un canal de liaison montante (310) et un canal de diffusion de liaison descendante (320), où le canal de liaison montante (310) comprend une pluralité de ressources de liaison montante,
recevoir (34) des informations relatives à une demande de planification (210) depuis l'émetteur-récepteur mobile (200),
déterminer (36) les informations relatives à un index de demande sur la base des informations relatives à la demande de planification (210),
déterminer (38) des informations relatives aux ressources octroyées (120) depuis la pluralité de ressources de liaison montante comprenant les informations relatives à l'index de demande,
transmettre (40) les informations relatives aux ressources octroyées (120) à l'au moins un émetteur-récepteur mobile (200) par l'intermédiaire du canal de diffusion de liaison descendante (320) en réponse aux informations relatives à la demande de planification (210),
où l'index de demande est associé à une ressource de liaison montante de la pluralité de ressources de liaison montante.

**14.** Procédé exécuté par un appareil approprié pour un émetteur-récepteur mobile (200) dans un système de communication mobile (300) comprenant en outre un émetteur-récepteur de station de base (100), le procédé comprenant les étapes suivantes :

communiquer (52) avec l'émetteur-récepteur de station de base (100) en utilisant au moins un canal de liaison montante (310), et un canal de diffusion de liaison descendante (320), où le canal de liaison montante (310) comprend une pluralité de ressources de liaison montante,
déterminer (54) les informations relatives à une demande de planification (210),

transmettre (56) les informations relatives à la demande de planification (210) à l'émetteur-récepteur de la station de base (100),

déterminer (58) les informations relatives à un index de demande sur la base des informations relatives à la demande de planification (210),

recevoir (60) les informations relatives aux ressources octroyées (120) depuis l'émetteur-récepteur de la station de base (100) par l'intermédiaire du canal de diffusion de liaison descendante (320) en réponse aux informations relatives à la demande de planification (210), aux informations relatives aux ressources octroyées (120) comprenant les informations relatives à l'index de demande,

déterminer (62) une ressource de liaison montante sur la base des informations relatives aux ressources octroyées (120) et des informations relatives à la demande de planification (210), où l'index de demande est associé à une ressource de liaison montante de la pluralité des ressources de liaison montante.

15. Programme informatique comprenant un code de programme pour exécuter au moins l'une des procédés des revendications 13 et 14, lorsque le programme informatique est exécuté sur un ordinateur, un processeur ou un composant matériel programmable.

12

310,320

200

14

10

100

300

Fig. 1

Fig. 2

Legend:

⬡ SR selected by the device

⬜ UL grant resource in search space

⬜ Candidate UR for transmission of small payload, given the selected SR

Fig. 3

Fig. 4

Fig. 5

N M SRs

6002

K=M=4

Pointer to 1 out of
N SRs + time stamp

M grants
per subframe

6004b

6004a

M URs
per subframe

6006b

6006a

Subframe i

Subframe i+4
Subframe i+5

Subframe i+8
Subframe i+9

Time

Fig. 6

K=M=4

N M SRs

Pointer to 1 out of N M SRs
+ time stamp

Pool of grants
Type 2
"fully flexible"

M URs

Pointer to 1 out
of M URs

Pointer to 1 out of N SRs

M grants
Type 1

M URs

~7002

~7004b

~7004a

7006a

7006b

Subframe i

Subframe i+4
Subframe i+5

Subframe i+8
Subframe i+9

Time

Fig. 7

Type A UR  ⌁ 8002

Type B UR  ⌁ 8004

Fig. 8

310,320

100

22

24

20

200

300

Fig. 9

INFORMATION RELATED TO ASSOCIATION BETWEEN PLURALITY OF REQUEST INDICES AND PLURALITY OF SCHEDULING REQUESTS 110

INFORMATION RELATED TO ASSOCIATION BETWEEN GRANTED RESOURCES AND THE PLURALITY OF UPLINK RESOURCES 112

INFORMATION RELATED TO CONTROL RESOURCES 114

INFORMATION RELATED TO ONE OR MORE SETS OF UPLINK RESOURCES 116

INFORMATION RELATED TO A TIME WINDOW 118

INFORMATION RELATED TO RESOURCE DIFFERENTIATION 119

INFORMATION RELATED TO SCHEDULING REQUEST 210

INFORMATION RELATED TO GRANTED RESOURCES 120

INFORMATION RELATED TO A RESOURCE GRANT 122

INFORMATION RELATED TO A NETWORK PAYLOAD 230

INFORMATION RELATED TO AN ACKNOWLEDGEMENT 140

Fig. 10

COMMUNICATING ~32

RECEIVING 34 → DETERMINING 36 → DETERMINING 38 → TRANSMITTING 40

Fig. 11

COMMUNICATING ~52

DETERMINING 54 → TRANSMITTING 56

RECEIVING 60 → DETERMINING 62

DETERMINING 58

Fig. 12

**EP 3 076 738 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2013028221 A1
- US 2012281566 A1
- US 2013250828 A1
- US 2013294319 A1
- US 2015023264 A1